# EUROPEAN PATENT APPLICATION

(11) **EP 4 192 043 A1**
(43) Date of publication of application: **07.06.2023**
(21) Application number: 21855296.6
(22) Date of filing: 07.07.2021
(51) Int. Cl.: H04W 4/06, H04W 24/02, H04W 36/00, H04W 40/02

(54) **COMMUNICATION METHOD AND APPARATUS**

(30) Priority: 13.08.2020 CN 202010814626
(71) Applicant: Huawei Technologies Co., Ltd., Shenzhen, Guangdong 518129 (CN)
(72) Inventor: LI, Meng, Shenzhen, Guangdong 518129 (CN); YANG, Yanmei, Shenzhen, Guangdong 518129 (CN); YING, Jiangwei, Shenzhen, Guangdong 518129 (CN)
(74) Representative: Thun, Clemens
(86) International application number: PCT/CN2021/104994
(87) International publication number: WO 2022/033243

(57) **Abstract**

This application provides a communication method and apparatus, applicable to a 5G system, a V2X system, and the like, to ensure reliability and efficiency of receiving a multicast service by a terminal device in a process in which the terminal device moves from a source access network device to a target access network device. The method includes: The source access network device determines that the target access network device is located within a third sub-service area of a second multicast service to which the source access network device belongs. The source access network device sends forwarding indication information to the target access network device, where the forwarding indication information indicates the target access network device to establish a second forwarding path, and the second forwarding path is used by the source access network device to send third data of the second multicast service to the target access network device.

## Description

This application claims priority to Chinese Patent Application No. 202010814626.1, filed with the China National Intellectual Property Administration on August 13, 2020 and entitled "COMMUNICATION METHOD AND APPARATUS", which is incorporated herein by reference in its entirety.

### TECHNICAL FIELD

This application relates to the communications field, and in particular, to a communication method and apparatus.

### BACKGROUND

Currently, when a terminal device is handed over from a source access network device to a target access network device, a session of the terminal device, for example, a multicast session, also needs to be handed over from the source access network device to the target access network device, so that the handed-over terminal device may continue to receive multicast data.

However, for a same multicast session, for example, a multicast session corresponding to a navigation service, the target access network device cannot learn whether multicast data corresponding to the source access network device is the same as multicast data corresponding to the target access network device. Therefore, if the multicast data corresponding to the source access network device is the same as the multicast data corresponding to the target access network device, the target access network device needs to forward, to the terminal device, the multicast data that has been received by the source access network device in a handover process and has not been forwarded to the terminal device. Otherwise, the multicast data received by the terminal device is incomplete, and consequently, a multicast service is discontinuous. In addition, if the multicast data corresponding to the source access network device is different from the multicast data corresponding to the target access network device, the target access network device does not need to forward, to the terminal device, the multicast data that has been received by the source access network device in the handover process and has not been forwarded to the terminal device. Otherwise, an error of the multicast service occurs because the terminal device cannot use the multicast data, and a waste of network resources is caused.

### SUMMARY

Embodiments of this application provide a communication method and apparatus, to improve reliability and efficiency of a multicast service.

To achieve the foregoing objective, this application uses the following technical solutions:

According to a first aspect, a communication method is provided. The communication method is applied to a terminal device moving from a source access network device to a target access network device, and the communication method includes: The target access network device obtains first reference information of a first multicast service. The target access network device sends information about a first forwarding path based on the first reference information, where the first forwarding path is used by the source access network device to send first data of the first multicast service to the target access network device.

Based on the communication method in the first aspect, in a process in which the terminal device is handed over from the source access network device to the target access network device, the target access network device may determine, based on the first reference information, whether multicast data corresponding to the source access network device is the same as multicast data corresponding to the target access network device. In this way, if the multicast data corresponding to the source access network device is the same as the multicast data corresponding to the target access network device, the target access network device may receive, from the source access network device through the first forwarding path, the multicast data that has been received by the source access network device and has not been forwarded to the terminal device, and forward the multicast data to the terminal device, to ensure that the terminal device can receive the complete multicast data. This ensures continuity and reliability of the multicast service. In addition, if the multicast data corresponding to the source access network device is different from the multicast data corresponding to the target access network device, the target access network device may not request to establish the forwarding path, therefore does not receive the multicast data that has been received by the source access network device and has not been forwarded to the terminal device, and does not send the multicast data to the terminal device, to ensure that the terminal device does not receive incorrect multicast data, and avoid a waste of network resources. This improves reliability and efficiency of the multicast service.

For example, the target access network device may directly send the information about the first forwarding path to the source access network device through an Xn interface, to establish the first forwarding path used by the source access network device to send the data to the target access network device.

Optionally, the target access network device may alternatively send the information about the first forwarding path to a core network element, for example, a mobility management network element, and the core network element then forwards the information about the first forwarding path to the source access network device, so that the source access network device establishes the first forwarding path.

In a possible design solution, the first reference information may include one or more of the following information: first identification information, first area information, or identification information of the first multicast service. The first identification information identifies the first data flow. In a possible example, the first identification information may be a location area identity (location area ID), and the first data flow is used by the source access network device to send the first data of the first multicast service to the terminal device. The first area information represents a first sub-service area of the first multicast service to which the source access network device belongs. In this way, the target access network device may establish the forwarding path from the source access network device to the target access network device based on the first reference information related to the multicast data received by the source access network device, so that the target access network device may receive the multicast data that has been received by the source access network device in a handover process and has not been forwarded to the terminal device, and forward the multicast data to the terminal device, to ensure that the terminal device can receive the complete multicast data. This ensures continuity and reliability of the multicast service.

Further, that the target access network device sends information about a first forwarding path based on the first reference information may include: If determining, based on the first reference information, that a first condition is met, the target access network device sends the information about the first forwarding path, where the first condition includes one or more of the following: the target access network device is located within the first sub-service area; the source access network device is located within a second sub-service area of the first multicast service to which the target access network device belongs; the first identification information corresponds to second identification information, the second identification information identifies a second data flow, and the second data flow is used by the target access network device to send second data of the first multicast service to the terminal device; or the first area information corresponds to second area information, and the second area information represents a second sub-service area of the first multicast service to which the target access network device belongs. In this way, the target access network device can establish the forwarding path to send the first data received in the handover process, only when the data flow corresponding to the target access network device is the same as the data flow of the source access network device, so that establishment of an unnecessary forwarding path can be effectively avoided to save network resources. This improves efficiency.

Optionally, the first area information identifies the first data, and the first area information corresponds to the first identification information. In this way, the target access network device may determine, based on the first identification information, whether the first data corresponding to the access network device is the same as the data received by the terminal device from the target access network device, so that a communication procedure of the target access network device is simplified. This improves communication efficiency.

Optionally, the information about the first forwarding path may be carried in a first message, and the first message may further include the first reference information. In this way, the source access network device may further send the corresponding first data to the target access network device based on the first reference information, to ensure that the terminal device continuously receives the multicast data before and after handover. This ensures reliability of multicast data transmission.

Optionally, the communication method according to the first aspect may further include: The target access network device receives the first reference information. In this way, the target access network device may alternatively quickly establish the forwarding path based on the received first reference information, so that the target access network device transmits, to the terminal device in time, the multicast data that has been received by the source access network device in the handover process and has not been forwarded to the terminal device, to ensure continuity and reliability of the multicast service.

In another possible design solution, the communication method according to the first aspect further includes: The target access network device receives the first data of the first multicast service from the source access network device through the first forwarding path. The target access network device sends the first data of the first multicast service to the terminal device based on second reference information. In this way, after the first forwarding path is established, the target access network device may still determine, based on the second reference information, whether the first data needs to be sent to the terminal device, to further ensure that the terminal device can receive the complete and correct data. This improves reliability of data transmission.

Further, the second reference information may include one or more of the following information: second identification information or second area information. The second identification information identifies a second data flow, and the second data flow is used by the target access network device to send second data of the first multicast service to the terminal device. The second area information represents a second sub-service area of the first multicast service to which the target access network device belongs. In this way, the target access network device may determine, based on only the second reference information, whether the first data needs to be sent to the terminal device. This can be applied to more scenarios, for example, a scenario in which the target access network device does not obtain the first reference information, while ensuring that the terminal device can receive the complete data or avoiding that the terminal device receives unnecessary data.

Furthermore, that the target access network device sends the first data of the first multicast service to the terminal device based on second reference information may include: If determining, based on the second reference information, that a second condition is met, the target access network device sends the first data of the first multicast service to the terminal device. The second condition may include one or more of the following: the source access network device is located within the second sub-service area; or the source access network device is located within a sub-service area corresponding to the second identification information. In this way, the target access network device may quickly determine, based on the second condition, whether the data corresponding to the target access network device is the same as the data corresponding to the source access network device, and send the first data when both are the same, to ensure that the terminal device can receive the complete and correct multicast data. This improves efficiency of data transmission.

Optionally, the communication method according to the first aspect may further include: The target access network device receives the second reference information from a multicast session management network element. In this way, the target access network device may transmit, to the terminal device in time based on the received second reference information, the first data of the first multicast service received in the handover process. This ensures service continuity of the terminal device.

Optionally, the first reference information may be carried in a second message, where the second message may further include identification information of a multicast session management network element. The communication method according to the first aspect may further include: The target access network device sends first channel information to the multicast session management network element, where the first channel information is used by the multicast user plane network element to send the second data of the first multicast service to the target access network device. In this way, the target access network device may directly communicate with the multicast session management network element, to avoid a problem that the target access network device needs to first communicate with a unicast session management network element to obtain the identification information of the multicast session management network element, to communicate with the multicast session management network element. This reduces a quantity of signaling interactions for establishing the first channel, and improves efficiency of data transmission.

According to a second aspect, a communication method is provided. The communication method is applied to a terminal device moving from a source access network device to a target access network device, and includes: The source access network device receives information about a first forwarding path. The source access network device sends first data of a first multicast service to the target access network device through the first forwarding path. In this way, the source access network device may send the first data of the first multicast service in a handover process to the target access network device through the first forwarding path, so that the first data of the first multicast service is forwarded to the terminal device, and it is ensured that the terminal device can receive the complete data. This improves continuity of the multicast service.

Further, the method further includes: The source access network device obtains first reference information of the first multicast service. That the source access network device sends first data of a first multicast service to the target access network device through the first forwarding path includes: The source access network device sends the first data of the first multicast service to the target access network device based on the first reference information through the first forwarding path.

Optionally, the information about the first forwarding path is carried in a first message, and the first message further includes the first reference information.

Furthermore, the first reference information includes one or more of the following information: first identification information, first area information, or identification information of the first multicast service. The first identification information identifies a first data flow, and the first data flow is used by the source access network device to send the first data of the first multicast service to the terminal device. The first area information represents a first sub-service area of the first multicast service to which the source access network device belongs.

In a possible design solution, the first reference information includes the first identification information; and that the source access network device sends the first data of the first multicast service to the target access network device based on the first reference information through the first forwarding path includes: The source access network device sends, to the target access network device through the first forwarding path, the first data corresponding to the first identification information. In this way, the source access network device may send, to the terminal device, multicast data corresponding to the first identification information, to ensure that the terminal device can receive complete data after handover. This ensures continuity of the multicast service.

In another possible design solution, the first reference information includes the first area information; and that the source access network device sends the first data of the first multicast service to the target access network device based on the first reference information through the first forwarding path includes: The source access network device determines, based on the first reference information, that the target access network device is located within a first sub-service area of the first multicast service to which the source access network device belongs. The source access network device sends first data of a first multicast service to the target access network device through the first forwarding path. In this way, when the target access network device is located within the first sub-service area of the source access network device, and it is equivalent to that the source access network device sends the first data to the target access network device only when the data transmitted by the target access network device to the terminal device corresponds to the data transmitted by the source access network device to the terminal device. This avoids that the target access network device receives useless data, reduces occupied network resources, and improves transmission efficiency.

Optionally, the method further includes: The source access network device sends the first reference information.

It should be noted that, the source access network device may send the first reference information to a core network element. For example, the source access network device may send the first reference information to a session management network element (UPF) or a mobility management network element (AMF), so that the core network element forwards the first reference information to the corresponding target access network device, to determine whether the first forwarding path needs to be established; or may directly send the first reference information to the target access network device, so that the target access network device directly determines, based on the first reference information, whether the first forwarding path needs to be established.

Further, the first reference information is carried in a second message, where the second message further includes identification information of a multicast session management network element.

In addition, for a technical effect of the communication method according to the second aspect, refer to the technical effect of the communication method according to the first aspect. Details are not described herein again.

According to a third aspect, a communication method is provided. The method is applied to a terminal device moving from a source access network device to a target access network device. The method includes: The source access network device determines that the target access network device is located within a third sub-service area of a second multicast service to which the source access network device belongs. The source access network device sends forwarding indication information to the target access network device, where the forwarding indication information indicates the target access network device to establish a second forwarding path, and the second forwarding path is used by the source access network device to send third data of the second multicast service to the target access network device.

Based on the communication method according to the third aspect, in a process in which the terminal device is handed over from the source access network device to the target access network device, the source access network device may determine, by determining whether the target access network device is located within the third sub-service area corresponding to the source access network device, that multicast data corresponding to the source access network device is the same as multicast data corresponding to the target access network device, and determine, based on a determining result, whether to request to establish the second forwarding path through which the source access network device sends the third data of the second multicast service to the target access network device. In this way, if the target access network device and the source access network device have a same sub-service area, the multicast data corresponding to the source access network device is the same as the multicast data corresponding to the target access network device, and the source access network device may send the forwarding indication information used to establish the second forwarding path, to send, to the target access network device, the third data that has been received by the source access network device and has not been forwarded to the terminal device. This ensures continuity and reliability of the multicast service. In addition, if the multicast data corresponding to the source access network device is different from the multicast data corresponding to the target access network device, the source access network device may alternatively not send the forwarding indication information, to avoid that unnecessary third data is transmitted to the terminal device. This reduces a waste of network resources and improves communication efficiency.

In a possible design solution, the method according to the third aspect may further include: The source access network device receives third area information, where the third area information represents the third sub-service area. Correspondingly, that the source access network device determines that the target access network device is located within a third sub-service area of a second multicast service to which the source access network device belongs may include: The source access network device determines, based on the third area information, that the target access network device is located within the third sub-service area. In this way, the access network device may quickly determine, based on the third area information, whether the target access network device is located within the third sub-service area, to establish the forwarding path from the source access network device to the target access network device in time, to ensure that the terminal device continuously receives the multicast data before and after handover. This ensures reliability of multicast data transmission.

Optionally, the forwarding indication information may be carried in a third message, and the third message may further include identification information of a multicast session management network element. In this way, the target access network device may directly request, based on the identification information of the multicast session management network element, the multicast session management network element to establish a multicast data transmission channel from a multicast user plane network element to the target access network device, and does not need to communicate with the unicast session management network element. This can reduce a quantity of signaling interactions, and improve efficiency.

According to a fourth aspect, a communication method is provided. The method is applied to a terminal device moving from a source access network device to a target access network device. The method includes: The target access network device receives forwarding indication information from the source access network device. The forwarding indication information indicates the target access network device to establish a second forwarding path, and the second forwarding path is used by the source access network device to send third data of a second multicast service to the target access network device. The target access network device sends the third data of the second multicast service from the source access network device to the terminal device based on the forwarding indication information.

In a possible design solution, the forwarding indication information may be carried in a third message, and the third message may further include identification information of a multicast session management network element. Correspondingly, the method according to the fourth aspect may further include: The target access network device sends second channel information to the multicast session management network element, where the second channel information is used by a multicast user plane network element to send fourth data of the second multicast service to the target access network device.

In addition, for a technical effect of the communication method according to the fourth aspect, refer to the technical effect of the communication method according to the third aspect. Details are not described herein again.

According to a fifth aspect, a communication method is provided. The method includes: A unicast session management network element sends location information of a terminal device to a multicast session management network element. The unicast session management network element receives third identification information from the multicast session management network element. The third identification information identifies a third data flow, and the third data flow is used by an access network device to send fifth data of a third multicast service to the terminal device.

Based on the communication method according to the fifth aspect, the multicast session management network element may return, to the unicast session management network element, the third identification information corresponding to the location information of the terminal device, to determine whether a downlink channel through which the multicast user plane network element performs data transmission needs to be established. In this way, this can avoid a waste of network resources while ensuring reliability of multicast data transmission, and improve efficiency of the data transmission.

In a possible design solution, the third identification information may be carried in a fourth message, the fourth message may further include fourth area information, and the fourth area information represents a fourth sub-service area of the third multicast service to which the access network device belongs. In this way, the unicast session management network element may determine, based on the fourth area information, the data of the multicast service corresponding to the terminal device, to determine whether a downlink channel through which a multicast user plane network element performs data transmission needs to be established, to transmit the received multicast data to the terminal device. This can avoid a waste of network resources while ensuring reliability of multicast data transmission, and improve efficiency of the data transmission.

In a possible design solution, the method according to the fifth aspect may further include: The unicast session management network element sends the third identification information to the access network device. In this way, the access network device may determine, based on the third identification information, whether to establish a downlink channel through which the multicast user plane network element performs data transmission. This avoids a waste of network resources while ensuring reliability of multicast data transmission, and improves efficiency of the data transmission.

Optionally, the third identification information may be carried in a fifth message, and the fifth message may further include fourth area information. In this way, the access network device may determine, based on the fourth area information and the location information of the terminal device, whether the terminal device is located within the fourth sub-service area of the access network device, to quickly determine whether a downlink channel through which the multicast user plane network element performs data transmission needs to be established. This can avoid a waste of network resources while ensuring reliability of multicast data transmission, and improve efficiency of the data transmission.

According to a sixth aspect, a communication method is provided. The method includes: A multicast session management network element receives location information of a terminal device from a unicast session management network element. The multicast session management network element sends third identification information to the unicast session management network element based on the location information of the terminal device. The third identification information identifies a third data flow, and the third data flow is used by an access network device to send fifth data of a third multicast service to the terminal device.

In a possible design solution, the third identification information may be carried in a fourth message, the fourth message may further include fourth area information, and the fourth area information represents a fourth sub-service area of the third multicast service to which the access network device belongs.

In addition, for a technical effect of the communication method according to the sixth aspect, refer to the technical effect of the communication method according to the fifth aspect. Details are not described herein again.

According to a seventh aspect, a communication apparatus is provided. The apparatus is applied to a terminal device moving from a source access network device to a target access network device. The apparatus includes: a processing module and a transceiver module. The processing module is configured to obtain first reference information of a first multicast service. The processing module is further configured to control, based on the first reference information, the transceiver module to send information about a first forwarding path, where the first forwarding path is used by the target access network device to receive first data of the first multicast service.

In a possible design solution, the first reference information includes one or more of the following information: first identification information, first area information, or identification information of the first multicast service. The first identification information identifies a first data flow, and the first data flow is used by the source access network device to send the first data of the first multicast service to the terminal device. The first area information represents a first sub-service area of the first multicast service to which the source access network device belongs.

In a possible design solution, the processing module is further configured to determine, based on the first reference information, that a first condition is met, where the first condition may include one or more of the following: the target access network device is located within the first sub-service area; the source access network device is located within a second sub-service area of the first multicast service to which the target access network device belongs; the first identification information corresponds to second identification information, the second identification information identifies a second data flow, and the second data flow is used by the target access network device to send second data of the first multicast service to the terminal device; or the first area information corresponds to second area information, and the second area information represents a second sub-service area of the first multicast service to which the target access network device belongs. The transceiver module is further configured to send the information about the first forwarding path.

Optionally, the first area information identifies the first data, and the first area information corresponds to the first identification information.

Optionally, the information about the first forwarding path may be carried in a first message, and the first message may further include the first reference information.

Optionally, the transceiver module is further configured to receive the first reference information.

In a possible design solution, the transceiver module is further configured to receive the first data of the first multicast service from the source access network device through the first forwarding path. The processing module is further configured to control, based on second reference information, the transceiver module to send the first data of the first multicast service to the terminal device.

In a possible design solution, the second reference information may include one or more of the following information: second identification information or second area information. The second identification information identifies a second data flow, and the second data flow is used by the target access network device to send second data of the first multicast service to the terminal device; and the second area information represents a second sub-service area of the first multicast service to which the target access network device belongs.

In a possible design solution, the processing module is further configured to determine, based on the second reference information, that a second condition is met. The second condition may include one or more of the following: the source access network device is located within the second sub-service area; or the source access network device is located within a sub-service area corresponding to the second identification information. The transceiver module is further configured to send the first data of the first multicast service to the terminal device.

Optionally, the transceiver module is further configured to receive the second reference information from a multicast session management network element.

Further, the first reference information may be carried in a second message, where the second message may further include identification information of a multicast session management network element. Correspondingly, the transceiver module is further configured to send first channel information to the multicast session management network element, where the first channel information is used by a multicast user plane network element to send the second data of the first multicast service to the target access network device.

Optionally, the transceiver module may include: a receiving module and a sending module. The receiving module and the sending module are respectively configured to implement a receiving function and a sending function of the communication apparatus according to the seventh aspect.

Optionally, the communication apparatus according to the seventh aspect may further include a storage module. The storage module stores a program or instructions. When the processing module executes the program or the instructions, the communication apparatus according to the seventh aspect is enabled to perform the communication method according to the first aspect.

It should be noted that the communication apparatus according to the seventh aspect may be an access network device, for example, a target access network device, or may be a chip (system) or another component or assembly that may be disposed in an access network device. This is not limited in this application.

In addition, for a technical effect of the communication apparatus according to the seventh aspect, refer to the technical effect of the communication method according to the first aspect. Details are not described herein again.

According to an eighth aspect, a communication apparatus is provided. The apparatus is applied to a terminal device moving from a source access network device to a target access network device. The apparatus includes: a processing module and a transceiver module. The transceiver module is configured to receive information about a first forwarding path. The processing module is configured to control the transceiver module to send first data of a first multicast service to the target access network device through the first forwarding path.

In a possible design solution, the processing module is further configured to: obtain first reference information of the first multicast service; and control, based on the first reference information, the transceiver module to send the first data of the first multicast service to the target access network device through the first forwarding path.

Optionally, the information about the first forwarding path may be carried in a first message, and the first message may further include the first reference information.

Optionally, the first reference information may include one or more of the following information: first identification information, first area information, or identification information of the first multicast service. The first identification information identifies a first data flow, and the first data flow is used by the source access network device to send the first data of the first multicast service to the terminal device. The first area information represents a first sub-service area of the first multicast service to which the source access network device belongs.

Optionally, the first reference information may include first identification information. Correspondingly, the transceiver module is further configured to send, to the target access network device through the first forwarding path, the first data corresponding to the first identification information.

Alternatively, optionally, the first reference information may include first area information. Correspondingly, the processing module is further configured to determine, based on the first reference information, that the target access network device is located within a first sub-service area of the first multicast service to which the source access network device belongs. The processing module is further configured to control the transceiver module to send the first data of the first multicast service to the target access network device through the first forwarding path.

In a possible design solution, the transceiver module is further configured to send the first reference information.

Optionally, the first reference information may be carried in a second message, where the second message may further include identification information of a multicast session management network element.

Optionally, the transceiver module may include: a receiving module and a sending module. The receiving module and the sending module are respectively configured to implement a receiving function and a sending function of the communication apparatus according to the eighth aspect.

Optionally, the communication apparatus according to the eighth aspect may further include a storage module. The storage module stores a program or instructions. When the processing module executes the program or the instructions, the communication apparatus according to the eighth aspect is enabled to perform the communication method according to the second aspect.

It should be noted that the communication apparatus according to the eighth aspect may be an access network device, for example, a source access network device, or may be a chip (system) or another component or assembly that may be disposed in an access network device. This is not limited in this application.

In addition, for a technical effect of the communication apparatus according to the eighth aspect, refer to the technical effect of the communication method according to the first aspect. Details are not described herein again.

According to a ninth aspect, a communication apparatus is provided. The apparatus is applied to a terminal device moving from a source access network device to a target access network device. The apparatus includes: a processing module and a transceiver module. The processing module is configured to determine that the target access network device is located within a third sub-service area of a second multicast service to which the source access network device belongs. The transceiver module is configured to send forwarding indication information to the target access network device, where the forwarding indication information indicates the target access network device to establish a second forwarding path, and the second forwarding path is used by the source access network device to send third data of the second multicast service to the target access network device.

In a possible design solution, the transceiver module is further configured to receive third area information, where the third area information represents the third sub-service area. The processing module is further configured to determine, based on the third area information, that the target access network device is located within the third sub-service area.

Optionally, the forwarding indication information may be carried in a third message, and the third message may further include identification information of a multicast session management network element.

Optionally, the transceiver module may include: a receiving module and a sending module. The receiving module and the sending module are respectively configured to implement a receiving function and a sending function of the communication apparatus according to the ninth aspect.

Optionally, the communication apparatus according to the ninth aspect may further include a storage module. The storage module stores a program or instructions. When the processing module executes the program or the instructions, the communication apparatus according to the ninth aspect is enabled to perform the communication method according to the third aspect.

It should be noted that the communication apparatus according to the ninth aspect may be an access network device, for example, a source access network device, or may be a chip (system) or another component or assembly that may be disposed in an access network device. This is not limited in this application.

In addition, for a technical effect of the communication apparatus according to the ninth aspect, refer to the technical effect of the communication method according to the third aspect. Details are not described herein again.

According to a tenth aspect, a communication apparatus is provided. The apparatus is applied to a terminal device moving from a source access network device to a target access network device. The apparatus includes: a processing module and a transceiver module. The transceiver module is configured to receive forwarding indication information from the source access network device, where the forwarding indication information indicates the target access network device to establish a second forwarding path, and the second forwarding path is used by the source access network device to send third data of a second multicast service to the target access network device. The processing module is further configured to control, based on the forwarding indication information, the transceiver module to send the third data of the second multicast service from the source access network device to the terminal device.

In a possible design solution, the forwarding indication information may be carried in a third message, and the third message may further include identification information of a multicast session management network element. Correspondingly, the transceiver module is further configured to send second channel information to the multicast session management network element, where the second channel information is used by a multicast user plane network element to send fourth data of the second multicast service to the target access network device.

Optionally, the transceiver module may include: a receiving module and a sending module. The receiving module and the sending module are respectively configured to implement a receiving function and a sending function of the communication apparatus according to the tenth aspect.

Optionally, the communication apparatus according to the tenth aspect may further include a storage module. The storage module stores a program or instructions. When the processing module executes the program or the instructions, the communication apparatus according to the tenth aspect is enabled to perform the communication method according to the fourth aspect.

It should be noted that the communication apparatus according to the tenth aspect may be an access network device, for example, a target access network device, or may be a chip (system) or another component or assembly that may be disposed in an access network device. This is not limited in this application.

In addition, for a technical effect of the communication apparatus according to the tenth aspect, refer to the technical effect of the communication method according to the third aspect. Details are not described herein again.

According to an eleventh aspect, a communication apparatus is provided, including: a sending module and a receiving module. The sending module is configured to send location information of a terminal device to a multicast session management network element. The receiving module is configured to receive third identification information from the multicast session management network element, where the third identification information identifies a third data flow, and the third data flow is used by an access network device to send fifth data of a third multicast service to the terminal device.

In a possible design solution, the third identification information may be carried in a fourth message, the fourth message may further include fourth area information, and the fourth area information represents a fourth sub-service area of the third multicast service to which the access network device belongs.

In a possible design solution, the sending module is further configured to send third identification information to the access network device.

Optionally, the third identification information may be carried in a fifth message, and the fifth message may further include fourth area information.

Optionally, the sending module and the receiving module may alternatively be integrated into one module, for example, a transceiver module. The transceiver module is configured to implement a sending function and a receiving function of the communication apparatus according to the eleventh aspect.

Optionally, the communication apparatus according to the eleventh aspect may further include: a processing module and a storage module. The storage module stores a program or instructions. When the processing module executes the program or the instructions, the communication apparatus according to the eleventh aspect is enabled to perform the communication method according to the fifth aspect.

It should be noted that the communication apparatus according to the eleventh aspect may be a unicast session management network element, for example, an SMF network element, or may be a chip (system) or another component or assembly that may be disposed in a unicast session management network element. This is not limited in this application.

In addition, for a technical effect of the communication apparatus according to the eleventh aspect, refer to the technical effect of the communication method according to the fifth aspect. Details are not described herein again.

According to a twelfth aspect, a communication apparatus is provided. The apparatus includes: a processing module and a transceiver module. The transceiver module is configured to receive location information of a terminal device from a unicast session management network element. The processing module is configured to control, based on the location information of the terminal device, the transceiver module to send third identification information to the unicast session management network element. The third identification information identifies a third data flow, and the third data flow is used by an access network device to send fifth data of a third multicast service to the terminal device.

In a possible design solution, the third identification information may be carried in a fourth message, the fourth message further includes fourth area information, and the fourth area information represents a fourth sub -service area of the third multicast service to which the access network device belongs.

Optionally, the transceiver module may include: a receiving module and a sending module. The receiving module and the sending module are respectively configured to implement a receiving function and a sending function of the communication apparatus according to the twelfth aspect.

Optionally, the communication apparatus according to the twelfth aspect may further include a storage module. The storage module stores a program or instructions. When the processing module executes the program or the instructions, the communication apparatus according to the twelfth aspect is enabled to perform the communication method according to the sixth aspect.

It should be noted that the communication apparatus according to the twelfth aspect may be a multicast session management network element, for example, an M-SMF network element, or may be a chip (system) or another component or assembly that may be disposed in a multicast session management network element. This is not limited in this application.

In addition, for a technical effect of the communication apparatus according to the twelfth aspect, refer to the technical effect of the communication method according to the fifth aspect. Details are not described herein again.

According to a thirteenth aspect, a communication apparatus is provided. The communication apparatus is configured to perform the communication method according to any one of the implementations of the first aspect to the sixth aspect.

In this application, the communication apparatus according to the thirteenth aspect may be the target access network device according to the first aspect or the fourth aspect, or the source access network device according to the second aspect or the third aspect, or the unicast session management network element according to the fifth aspect or the multicast session management network element according to the sixth aspect, or a chip (system) or another component or assembly that may be disposed in the foregoing each device and/or network element, or an apparatus including the foregoing device and/or network element.

It should be understood that the communication apparatus according to the thirteenth aspect includes a corresponding module, unit, or means (means) for implementing the communication method according to any one of the first aspect to the sixth aspect. The module, unit, or means may be implemented by hardware, or may be implemented by software, or may be implemented by hardware executing corresponding software. The hardware or software includes one or more modules or units configured to perform functions related to any one of the foregoing communication methods.

In addition, for a technical effect of the communication apparatus according to the thirteenth aspect, refer to the technical effect of the communication method according to any one of the first aspect to the sixth aspect. Details are not described herein again.

According to a fourteenth aspect, a communication apparatus is provided. The communication apparatus includes a processor, and the processor is configured to perform the communication method according to any one of the possible implementations of the first aspect to the sixth aspect.

In a possible design solution, the communication apparatus according to the fourteenth aspect may further include a transceiver. The transceiver may be a transceiver circuit or an interface circuit. The transceiver may be used by the communication apparatus according to the fourteenth aspect to communicate with another communication apparatus.

In a possible design solution, the communication apparatus according to the fourteenth aspect may further include a memory. The memory and the processor may be integrated together, or may be disposed separately. The memory may be configured to store a computer program and/or data related to the communication method according to any one of the first aspect to the sixth aspect.

In this application, the communication apparatus according to the fourteenth aspect may be the target access network device according to the first aspect or the fourth aspect, or the source access network device according to the second aspect or the third aspect, or the unicast session management network element according to the fifth aspect or the multicast session management network element according to the sixth aspect, or a chip (system) or another component or assembly that may be disposed in the foregoing each device and/or network element, or an apparatus including the foregoing device or network element.

In addition, for a technical effect of the communication apparatus according to the fourteenth aspect, refer to the technical effect of the communication method according to any one of the implementations of the first aspect to the sixth aspect. Details are not described herein again.

According to a fifteenth aspect, a communication apparatus is provided. The communication apparatus includes a processor. The processor is coupled to a memory, and the processor is configured to execute a computer program stored in the memory, to enable the communication apparatus to perform the communication method according to any one of the possible implementations of the first aspect to the sixth aspect.

In a possible design solution, the communication apparatus according to the fifteenth aspect may further include a transceiver. The transceiver may be a transceiver circuit or an interface circuit. The transceiver may be used by the communication apparatus according to the fifteenth aspect to communicate with another communication apparatus.

In this application, the communication apparatus according to the fifteenth aspect may be the target access network device according to the first aspect or the fourth aspect, or the source access network device according to the second aspect or the third aspect, or the unicast session management network element according to the fifth aspect or the multicast session management network element according to the sixth aspect, or a chip (system) or another component or assembly that may be disposed in the foregoing each device and/or network element, or an apparatus including the foregoing device or network element.

In addition, for a technical effect of the communication apparatus according to the fifteenth aspect, refer to the technical effect of the communication method according to any one of the implementations of the first aspect to the sixth aspect. Details are not described herein again.

According to a sixteenth aspect, a communication apparatus is provided, including: a processor and a memory. The memory is configured to store a computer program, and when the processor executes the computer program, the communication apparatus is enabled to perform the communication method according to any one of the implementations of the first aspect to the sixth aspect.

In a possible design solution, the communication apparatus according to the sixteenth aspect may further include a transceiver. The transceiver may be a transceiver circuit or an interface circuit. The transceiver may be used by the communication apparatus according to the sixteenth aspect to communicate with another communication apparatus.

In this application, the communication apparatus according to the sixteenth aspect may be the target access network device according to the first aspect or the fourth aspect, or the source access network device according to the second aspect or the third aspect, or the unicast session management network element according to the fifth aspect or the multicast session management network element according to the sixth aspect, or a chip (system) or another component or assembly that may be disposed in the foregoing each device and/or network element, or an apparatus including the foregoing device or network element.

In addition, for a technical effect of the communication apparatus according to the sixteenth aspect, refer to the technical effect of the communication method according to any one of the implementations of the first aspect to the sixth aspect. Details are not described herein again.

According to a seventeenth aspect, a communication apparatus is provided, including a processor. The processor is configured to: be coupled to a memory, after reading a computer program in the memory, perform the communication method according to any one of the implementations of the first aspect to the sixth aspect based on the computer program.

In a possible design solution, the communication apparatus according to the seventeenth aspect may further include a transceiver. The transceiver may be a transceiver circuit or an interface circuit. The transceiver may be used by the communication apparatus according to the seventeenth aspect to communicate with another communication apparatus.

In this application, the communication apparatus according to the seventeenth aspect may be the target access network device according to the first aspect or the fourth aspect, or the source access network device according to the second aspect or the third aspect, or the unicast session management network element according to the fifth aspect or the multicast session management network element according to the sixth aspect, or a chip (system) or another component or assembly that may be disposed in the foregoing each device and/or network element, or an apparatus including the foregoing device or network element.

In addition, for a technical effect of the communication apparatus according to the seventeenth aspect, refer to the technical effect of the communication method according to any one of the implementations of the first aspect to the sixth aspect. Details are not described herein again.

According to an eighteenth aspect, a processor is provided. The processor is configured to perform the communication method according to any one of the possible implementations of the first aspect to the sixth aspect.

According to a nineteenth aspect, a communication system is provided. The communication system includes one or more terminal devices and one or more access network devices such as a source access network device and a target access network device.

Optionally, the communication system may further include one or more core network elements such as a unicast session management network element and a multicast session management network element.

According to a twentieth aspect, a computer-readable storage medium is provided, including: a computer program or instructions. When the computer program or the instructions are run on a computer, the computer is enabled to perform the communication method according to any one of the possible implementations of the first aspect to the sixth aspect.

According to a twenty-first aspect, a computer program product is provided. The computer program product includes a computer program or instructions. When the computer program or the instructions are run on a computer, the computer is enabled to perform the communication method according to any one of the possible implementations of the first aspect to the sixth aspect.

### BRIEF DESCRIPTION OF DRAWINGS

FIG. 1 is a schematic diagram 1 of an architecture of a communication system;
FIG. 2 is a schematic diagram 2 of an architecture of a communication system;
FIG. 3 is a schematic flowchart 1 of a communication method according to an embodiment of this application;
FIG. 4 is a schematic flowchart 2 of a communication method according to an embodiment of this application;
FIG. 5 is a schematic flowchart 3 of a communication method according to an embodiment of this application;
FIG. 6 is a schematic flowchart 4 of a communication method according to an embodiment of this application;
FIG. 7 is a schematic flowchart 5 of a communication method according to an embodiment of this application;
FIG. 8 is a schematic flowchart 6 of a communication method according to an embodiment of this application;
FIG. 9 is a schematic flowchart 7 of a communication method according to an embodiment of this application;
FIG. 10 is a schematic flowchart 8 of a communication method according to an embodiment of this application;
FIG. 11 is a schematic diagram 1 of a structure of a communication apparatus according to an embodiment of this application;
FIG. 12 is a schematic diagram 2 of a structure of a communication apparatus according to an embodiment of this application; and
FIG. 13 is a schematic diagram 3 of a structure of a communication apparatus according to an embodiment of this application.

### DESCRIPTION OF EMBODIMENTS

The following describes technical solutions of this application with reference to the accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design solution described as an "example" in this application should not be explained as being more preferred or having more advantages than another embodiment or design solution. Specifically, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. The terms "of (of)", "corresponding (corresponding, relevant)", and "corresponding to (corresponding)" may be interchangeably used sometimes. It should be noted that when differences are not emphasized, meanings to be expressed are the same.

In embodiments of this application, a subscript, for example, W₁, may sometimes be written in an incorrect form, for example, W1. Expressed meanings are consistent when differences are not emphasized.

A network architecture and a service scenario that are described in embodiments of this application are intended to describe the technical solutions in embodiments of this application more clearly, and do not constitute a limitation on the technical solutions provided in embodiments of this application. A person of ordinary skill in the art may know that, with evolution of the network architecture and emergence of new service scenarios, the technical solutions provided in embodiments of this application are also applicable to similar technical problems.

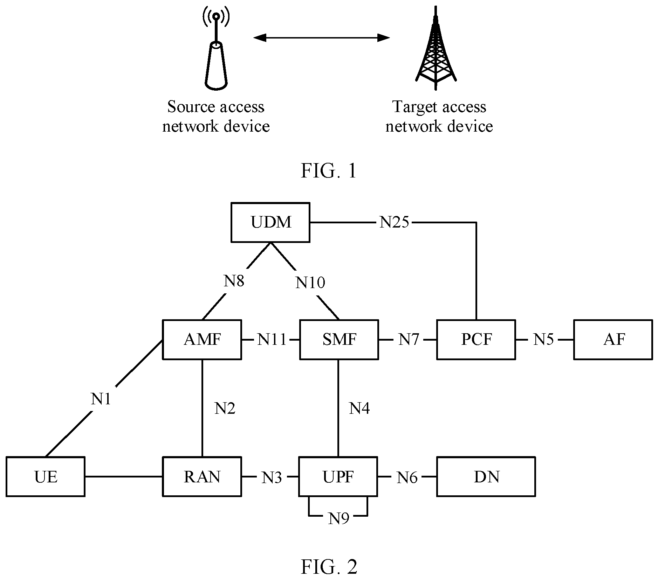

For ease of understanding embodiments of this application, a communication system shown in FIG. 1 is first used as an example to describe in detail a communication system applicable to embodiments of this application. It should be noted that the solutions in embodiments of this application may also be applied to another mobile communication system, and a corresponding name may also be replaced with a name of a corresponding function in the another mobile communication system.

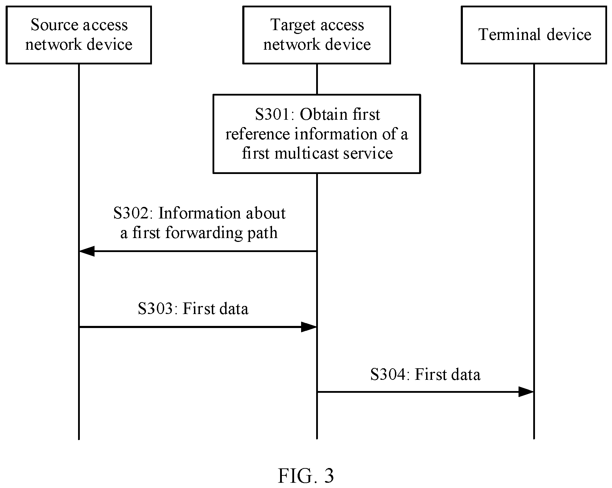

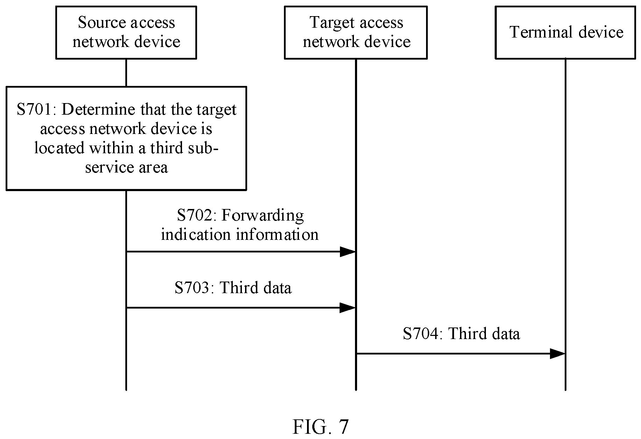

For example, FIG. 1 is a schematic diagram of an architecture of a communication system to which a communication method according to an embodiment of this application is applicable. As shown in FIG. 1, the communication system includes: a source access network device and a target access network device. The source access network device is configured to perform S303 in FIG. 3 and S701, S702, and S703 in FIG. 7. The target access network device is configured to perform S301, S302, and S304 in FIG. 3 and S704 in FIG. 7.

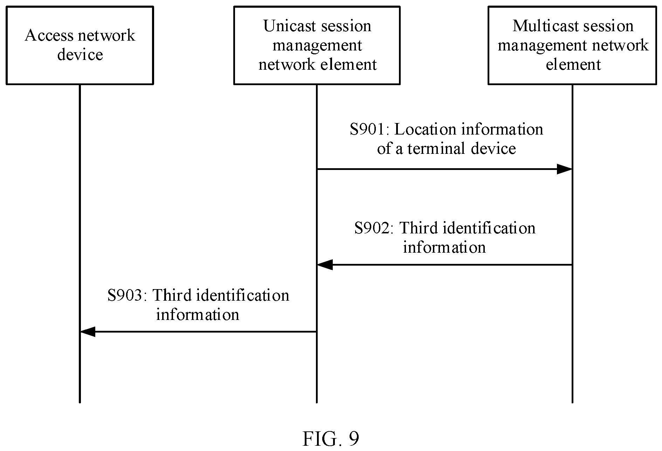

Optionally, the communication system may further include one or more session management network elements such as a multicast session management network element and a unicast session management network element. The multicast session management network element is configured to perform S902 in FIG. 9, and the unicast session management network element is configured to perform S901 and S903 in FIG. 9.

Further, the communication system shown in FIG. 1 further includes a terminal device.

The communication system includes: the terminal device, the source access network device, and the target access network device. Optionally, the communication system may further include one or more of the following: the multicast session management network element, a multicast user plane network element, and the unicast session management network element (not shown in FIG. 1).

Both the source access network device and the target access network device are access network devices that may provide a multicast service for the terminal device, the multicast session management network element is a session management network element corresponding to a multicast session, the multicast user plane network element is a user plane network element corresponding to the multicast session, and the unicast session management network element is a session management network element corresponding to a unicast session. It should be understood that, when the terminal device is handed over from the source access network device to the target access network device, a session of the terminal device further needs to be handed over from the source access network device to the target access network device, to ensure that the handed-over terminal device may receive multicast data from the target access network device. The session that needs to be handed over may include: a multicast session and a unicast session corresponding to the multicast session.

In this embodiment of this application, the multicast data is data transmitted within a multicast group, and the multicast session is a session carrying the multicast data. Handing over to the multicast session may be understood as joining the multicast session. Joining the multicast session may be understood as joining the multicast group, requesting to receive data corresponding to the multicast group, requesting to receive data corresponding to the multicast session, or requesting the multicast service.

It should be noted that, the multicast data may be provided by the multicast user plane network element, may be provided by an AF network element or a data network (data network, DN), or may be provided by a data network element and the multicast user plane network element. A source of the multicast data is not specifically limited in this embodiment of this application.

The following specifically describes, with reference to an example, the communication system shown in FIG. 1.

For example, FIG. 2 is a schematic diagram of a structure of a 5G system. As shown in FIG. 2, the 5G system may include two parts: an access network (access network, AN) and a core network (core network, CN). The AN is mainly configured to implement radio access-related functions, and may include a radio access network (radio access network, RAN) device. The core network mainly includes the following network elements: an access and mobility management function (access and mobility management function, AMF) network element, a session management function (session management function, SMF) network element, a UPF network element, a policy control function (policy control function, PCF) network element, a unified data management (unified data management, UDM) network element, and an application function (application function, AF) network element.

The AMF network element is mainly responsible for mobility management such as user location update, user network registration, and a cell handover in a wireless network.

The SMF network element is mainly responsible for session management such as session establishment, modification, and release in the wireless network. Specific functions may include: assigning an internet protocol (internet protocol, IP) address to a user, selecting a UPF network element that provides a packet forwarding function, and so on.

The PCF network element is mainly responsible for providing various policies such as a network slice selection policy and a quality of service (quality of service, QoS) policy for the AMF network element and the SMF network element.

The UPF network element is mainly responsible for processing a user packet, such as forwarding and charging for the user packet.

The UDM network element is mainly configured to store user data such as subscription information and authentication/authorization information.

The AF is mainly responsible for providing a service for a 3rd generation partnership project (3rd generation partnership project, 3GPP) network, for example, affecting service routing and interacting with the PCF network element to perform policy control.

The DN may be a carrier network, for example, an IP multimedia subsystem (IP multimedia subsystem, IMS), that provides a data transmission service for a user, or may be an external network such as an internet (internet) or a network deployed by a content provider (content provider), connected to a carrier network.

Functions of the source access network device and the target access network device shown in FIG. 1 may be implemented by a RAN shown in FIG. 2, a function of the terminal device may be implemented by a UE shown in FIG. 2, functions of the multicast session management network element and the unicast session management network element may be implemented by the SMF network element shown in FIG. 2, and a function of the multicast user plane network element may be implemented by the UPF network element shown in FIG. 2.

For ease of description, the network elements shown in FIG. 2 are merely an example. During actual application, there may alternatively be a plurality of network elements with a same name shown in FIG. 2. For example, the SMF network element shown in FIG. 2 may include one or more unicast SMF (unicast SMF, U-SMF) network elements not supporting a multicast service and one or more multicast SMFs (multicast SMFs, M-SMFs) supporting the multicast service. For another example, the UPF network element shown in FIG. 2 may include one or more unicast UPF (unicast UPF, U-UPF) network elements not supporting a multicast service and one or more multicast UPF (multicast UPF, M-UPF) network elements supporting the multicast service.

It should be noted that the one or more multicast SMFs (namely, M-SMFs) supporting the multicast service herein may be implemented by enhancing a function of the unicast SMF, for example, may be a unicast SMF serving as a multicast session management anchor; or may be a special network element having a multicast session management function. A specific representation form is not limited in embodiments of this application.

In addition, the one or more multicast UPF (namely, M-UPF) network elements supporting the multicast service may be obtained by enhancing a function of the unicast SMF, for example, may serve as an anchor of multicast session data; or may be a special network element having a multicast session data entry function (where for example, the M-UPF may serve as a unified multicast user plane network element, and is irrelevant to the unicast UPF). A specific representation form is not limited in embodiments of this application.

A user may access, by using the UE, the communication system shown in FIG. 1 or FIG. 2, to receive a network service provided by an operator or a third-party content provider (content provider, CP). Specifically, FIG. 2 is used as an example. The user may access the 5G system by using the UE. For example, the user may receive various network services such as unicast (unicast), multicast (multicast), and broadcast (broadcast) by establishing a PDU session from the UE to the data network (data network, DN) deployed by the content provider, another UPF network element, or the AF network element via the RAN and the UPF. For a specific implementation, refer to the following method embodiments. Details are not described herein.

The source access network device, the target access network device, the access network device, or the RAN is a device located on a network side of the communication system and having a wireless transceiver function, or is a chip (system) that may be disposed in a network side device or another component or assembly, and includes but is not limited to: an access point (access point, AP) such as a home gateway, a router, a server, a switch, or a network bridge in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission reception point, TRP or transmission point, TP), or the like; may be a gNB or a transmission point (TRP or TP) in a 5G system, for example, a new radio (new radio, NR) system, or one antenna panel or a group of antenna panels (including a plurality of antenna panels) of a base station in a 5G system; or may be a network node such as a baseband unit (BBU) or a distributed unit (distributed unit, DU) included in a gNB or a transmission point, a road side unit (road side unit, RSU) having a base station function, or the like.

The terminal device is a terminal accessing the communication system and having a wireless transceiver function, or a chip or a chip system that may be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent, or a user apparatus. A first terminal in embodiments of this application may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in embodiments of this application may alternatively be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement the communication method provided in embodiments of this application.

In embodiments of this application, the access network device and various network elements in the core network may also be collectively referred to as network side devices or network devices. Similarly, the terminal device may also be referred to as a user side device or a user equipment. A name of each network side device or user side device is not specifically limited in embodiments of this application.

It should be understood that, FIG. 1 and FIG. 2 are merely simplified schematic diagrams used as examples for ease of understanding. The communication systems shown in FIG. 1 and FIG. 2 may further include other network devices and/or other terminal devices that are not shown in FIG. 1.

For example, FIG. 3 is a schematic flowchart 1 of a communication method according to an embodiment of this application. The communication method may be applied to the communication system shown in FIG. 1 or FIG. 2. The following uses the communication system shown in FIG. 1 as an example for description.

As shown in FIG. 3, the communication method may be applied to a terminal device moving or handed over from a source access network device to a target access network device. The communication method includes the following steps.

S301: The target access network device obtains first reference information of a first multicast service.

For example, the target access network device may be the RAN shown in FIG. 2. The first multicast service may be a service in a multimedia broadcast service, for example, a map update service, a video download service, or a web browsing service. The first reference information of the first multicast service may represent multicast data that is related to the first multicast service and that is received by the terminal device from the source access network device. The terminal device may be the UE shown in FIG. 2.

In a possible design solution, the first reference information may include one or more of the following information: first identification information, first area information, or identification information of the first multicast service. The first identification information identifies a first data flow, and the first data flow may be used by the source access network device to send first data of the first multicast service to the terminal device. The first area information represents a first sub-service area of the first multicast service to which the source access network device belongs. The following separately provides descriptions.

For example, the first identification information may identify the first data received by the terminal device in a session procedure corresponding to the source access network device. In a same session procedure, different data flows are for transmitting different data, and there is a correspondence between the data flow and the data transmitted by using the data flow. Therefore, the corresponding multicast data may be identified by identifying the data flow. For example, the first identification information may identify, by identifying the first data flow, the first data transmitted by using the first data flow. The first data may be multicast data received by the terminal device in the session procedure corresponding to the source access network device, namely, the first data. After receiving the first data, the terminal device may correspondingly perform the first multicast service.

The first area information may represent a first sub-service area of the first multicast service to which the source access network device belongs, or may identify the first data received by the terminal device. A service area of a same multicast service may be divided into a plurality of sub-service areas. The sub-service areas may be obtained through division based on a granularity of a service area of the access network device. For example, one sub-service area corresponds to one access network device. Clearly, one sub-service area may alternatively correspond to a plurality of access network devices, namely, a service area or a coverage area including the plurality of access network devices. When different access network devices belong to different sub-service areas, multicast data transmitted to the terminal device by using corresponding session procedures is also different, and there is a correspondence between the sub-service areas to which the access network devices belong and the multicast data transmitted by the access network devices. Therefore, the multicast data transmitted by the access network devices to the terminal device may be distinguished from each other by distinguishing between the sub-service areas to which the access network devices belong. For example, the first area information represents the first sub-service area to which the source access network device belongs, so that it may be determined that the terminal device receives the first data in the session procedure corresponding to the source access network device.

For example, the service area of the same multicast service may be divided into a plurality of sub-service areas. The service area of the access network device is used as a granularity for division. If one sub-service area corresponds to one access network device, when the terminal device is handed over from the source access network device to the target access network device, the source access network device and the target access network device belong to different sub-service areas. Therefore, multicast data transmitted to the terminal device by using corresponding session procedures is also different.

For example, if one sub-service area corresponds to a plurality of access network devices, when the terminal device is handed over from the source access network device to the target access network device, and the source access network device and the target access network device belong to a same sub-service area, multicast data transmitted to the terminal device by using corresponding session procedures is the same. If the source access network device and the target access network device belong to different sub-service areas, multicast data transmitted to the terminal device by using corresponding session procedures is also different.

There is a correspondence between the sub-service areas to which the access network devices belong and the multicast data transmitted by the access network devices, so that the multicast data transmitted by the access network devices to the terminal device may be distinguished from each other by distinguishing between the sub-service areas to which the access network devices belong. For example, the first area information represents the first sub-service area to which the source access network device belongs, so that it may be determined that the terminal device receives the first data in the session procedure corresponding to the source access network device.

The identification information of the first multicast service may identify the multicast service received by the terminal device. The identification information of the first multicast service may be service identification (service ID), multicast session identification (multicast session ID), internet protocol (internet protocol, IP) ternary group information (protocol version, local IP address, and local port number), identification information of the terminal device (such as device identification or application identification), a temporary mobile group identity (temporary mobile group identity, TMGI) of a multicast group, an IP address of an application server that provides the multicast data, packet filter (packet filter) information of the multicast data, a service data flow (service data flow, SDF) identification rule of the multicast data, or the like.

It should be noted that, for the same multicast service, terminal devices belonging to the same sub-service area receive same multicast data, and terminal devices belonging to different sub-service areas receive different multicast data. For example, if being located in the same sub-service area, a terminal device located in a place A and a terminal device located in a place B receive same map information (namely, multicast data). If being not located in the same sub-service area, the terminal device located in the place A and the terminal device located in the place B receive different map information (namely, multicast data).

Both the first identification information and the first area information may identify the multicast data received by the terminal device, and may indicate the first data of the first multicast service received by the terminal device from the source access network device. Therefore, whether the first data corresponding to the source access network device is the same as the multicast data received by the terminal device from the target access network device may be determined by using the first identification information and/or the first area information. If the first data corresponding to the source access network device is the same as the multicast data received by the terminal device from the target access network device, the first data that has been received by the source access network device and has not been forwarded to the terminal device needs to be sent to the terminal device. This ensures continuity of the multicast service of the terminal device. If the first data corresponding to the source access network device is different from the multicast data received by the terminal device from the target access network device, the first data received by the network device in a handover process does not need to be sent to the handed-over terminal device. This avoids a waste of network resources.

It should be noted that, both the first identification information and the first area information may identify the first data received by the terminal device in the session procedure corresponding to the source access network device. In other words, there is a correspondence between the first identification information and the first area information. The first area information may be determined by using the first identification information, or the first identification information may be determined by using the first area information.

In this way, the target access network device may determine, based on the first identification information, whether the first data corresponding to the access network device is the same as the data received by the terminal device from the target access network device, so that a communication procedure of the target access network device is simplified. This improves communication efficiency.

Optionally, the target access network device receives the first reference information.

Specifically, that the target access network device receives first reference information may include: The source access network device sends the first reference information to the target access network device, and the target access network device receives the first reference information from the source access network device.

It should be noted that, when determining that the terminal device needs to be handed over to the target access network device, the source access network device may send the first reference information to the target access network device, to ensure that the handed-over terminal device may receive the multicast data from the target access network device.

Optionally, the source access network device may send the first reference information to the target access network device through an Xn interface, and the target access network device may receive the first reference information of the first multicast service from the source access network device through the Xn interface.

The Xn interface is an interface between the access network devices. For example, a RAN 1 and a RAN 2 may transmit information through the Xn interface.

Optionally, the core network element sends the first reference information to the target access network device, and the target access network device receives the first reference information from the core network element.

For example, the core network element may be the AMF network element shown in FIG. 2. When determining a session procedure in which the terminal device needs to be handed over to the target access network device, the source access network device may send the first reference information to the AMF network element, so that the target access network device may receive the first reference information from the AMF network element.

Optionally, the core network element may send the first reference information to the target access network device through an N2 interface, and the target access network device may receive the first reference information of the first multicast service from the core network element through the N2 interface.

The N2 interface is an interface between the AMF network element and the access network device.

It should be noted that, if determining, based on a measurement report (measurement report, MR) sent by the terminal device, that the terminal device needs to be handed over from the device to the target access network device, the source access network device may send the first reference information to the target access network device. The terminal device may, periodically or after a specified condition is met, send the measurement report to the source access network device based on configuration information of the source access network device. The measurement report is used by the access network device to configure the terminal device to report measurement information after the specified condition is met, so that the source access network device may determine whether the terminal device needs to perform session handover, and determine an access network device to which the terminal device is handed over, namely, the target access network device.

It should be noted that, the source access network device may obtain, from a mobility management network element, a user plane network element, a session management network element, or a centralized storage network element, at least one of the following: first identification information, first area information, or identification information of the first multicast service. The centralized storage network element may include: the UDM network element shown in FIG. 2, a unified data repository (unified data repository, UDR) network element, and a network repository function (network repository function, NRF) network element.

Optionally, the first reference information of the first multicast service may be carried in a second message, and the second message requests to hand over the terminal device to the target access network device. The second message may be a handover request (handover request) message sent by the source access network device to the target access network device through the Xn interface. When the terminal device moves from the source access network device to the target access network device, the source access network device may send the handover request message to the target access network device, to request to hand over the terminal device to the target access network device, so that the terminal device may receive the multicast data from the target access network device. In addition to the first reference information, the second message may further include: the identification information of the first multicast service or the identification information of the terminal device.

Optionally, the second message may further include identification information of a multicast session management network element. Correspondingly, the communication method shown in FIG. 3 may further include: The target access network device sends first channel information to the multicast session management network element, where the first channel information is used by the multicast user plane network element to send the second data of the first multicast service to the target access network device.

For example, the multicast session management network element may be the SMF network element shown in FIG. 2, for example, a multicast session management (multicast SMF, M-SMF) network element. The first channel information requests to establish a first channel, and the multicast user plane network element may send the second data of the first multicast service to the target access network device through the first channel.

Optionally, the target access network device may directly send, to the multicast session management network element based on the identification information of the multicast session management network element, the first channel information, for example, RAN 2→AMF network element→M-SMF network element, to avoid a problem that the target access network device can send the first channel information to the multicast session management network element only after first obtaining the identification information of the multicast session management network element from a unicast session management network element or the centralized storage network element. This can reduce a quantity of signaling interactions for establishing the first channel, and improve efficiency.

The first channel is a channel through which the target access network device receives the second data of the first multicast service. A source of the second data may be the DN, or may be the AF network element or the M-UPF network element. In other words, the first channel focuses on a fact that the target access network device can receive the multicast data, and does not limit a transmission path through which the multicast data arrives at the target access network device, to be specific, does not limit network elements through which the multicast data passes before the multicast data arrives at the access network device. For example, the first channel may be one of the following: DN A multicast user plane network element→target access network device, DN→multicast user plane network elements unicast user plane network element->target access network device, AF network elements multicast user plane network element→target access network device, and AF network element→multicast user plane network element→unicast user plane network element A target access network device. There may be one or more multicast user plane network elements and/or unicast user plane network elements on the first channel.

If the first channel through which the target access network device receives the multicast data already exists, for example, before the terminal device is handed over to the target access network device, another terminal device within coverage of the target access network device has requested the session management network element to establish the channel through which the target access network device receives the multicast data, the target access network device may directly receive the second data through the first channel, and send the second data to the handed-over terminal device. If no first channel exists, the target access network device needs to send a channel establishment request to the unicast session management network element, to establish the first channel.

Optionally, if the identification information of the multicast session management network element is not carried in the second message, the target access network device may alternatively send the first channel information to the unicast SMF network element, and the unicast SMF network element then sends, to the multicast session management network element, the first channel information, for example, RAN 2→AMF network element→SMF network element→M-SMF network element, to request the multicast user plane network element to send the second data of the first multicast service to the target access network device through the first channel.

S302: The target access network device sends information about a first forwarding path based on the first reference information.

The first forwarding path is used by the source access network device to send the first data of the first multicast service to the target access network device.

For example, the information about the first forwarding path may request to establish the first forwarding path, and the information about the first forwarding path may include: a tunnel identifier (tunnel identifier, TID), a tunnel endpoint identifier (tunnel endpoint identifier, TEID), or information about an IP address of the first forwarding path, or include multicast context information. The first forwarding path may include: a path through which the source access network device directly sends the first data to the target access network device, for example, RAN 1→RAN 2, or a path through which the source access network device sends the first data to the UPF network element, and the UPF network element then sends the first data to the target access network device, for example, RAN 1→UPF network element→RAN 2.

It should be noted that, the first data of the first multicast service may be multicast data that has been received by the source access network device in the handover process and has not been forwarded to the terminal device. The target access network device may determine, based on the first reference information, whether the multicast data received by the to-be-handed-over terminal device by using the source access network device is the same as the multicast data received by the handed-over terminal device by using the target access network device. If the multicast data received by the to-be-handed-over terminal device by using the source access network device is the same as the multicast data received by the handed-over terminal device by using the target access network device, the target access network device requests the source access network device to establish the first forwarding path, so that the target access network device receives the first data of the first multicast service from the source access network device, and forwards the first data of the first multicast service to the terminal device.

In a possible design solution, that the target access network device sends information about a first forwarding path based on the first reference information may include: If determining, based on the first reference information, that a first condition is met, the target access network device sends the information about the first forwarding path.

The first condition includes one or more of the following:
Condition 1: the target access network device is located within the first sub-service area;
Condition 2: the source access network device is located within a second sub-service area of the first multicast service to which the target access network device belongs;
Condition 3: the first identification information corresponds to second identification information, the second identification information identifies a second data flow, and the second data flow is used by the target access network device to send second data of the first multicast service to the terminal device; or
Condition 4: the first area information corresponds to second area information, and the second area information represents a second sub-service area of the first multicast service to which the target access network device belongs. The following separately provides descriptions.

For example, the second identification information identifies the second data received by the terminal device by using the target access network device. The second identification information may identify, by identifying the second data flow, the second data transmitted by using the second data flow. Similarly, because the second area information corresponds to the second identification information, the second data may also be identified by using the second area information. In other words, the second area information represents the second sub-service area of the first multicast service to which the target access network device belongs, or may identify the second data received by the terminal device. In this way, if the source access network device is located within the second sub-service area corresponding to the second area information, it may be determined that the source access network device and the target access network device belong to a same sub-service area, so that it is determined that the target access network device needs to send the first data to the terminal device.

Refer to Condition 1. Because the first area information represents the first sub-service area of the first multicast service to which the source access network device belongs, in other words, the first area information corresponds to the first sub-service area, the target access network device may determine, based on location information of the target access network device, whether the target access network device is located within the first sub-service area. If the target access network device is located within the first sub-service area corresponding to the first area information, it may be determined that the source access network device and the target access network device belong to a same sub-service area, so that it is determined that the target access network device needs to send the first data to the terminal device, and the first forwarding path through which the target access network device receives the multicast data from the source access network device needs be established. In this case, the target access network device sends a message of the first forwarding path.

Similarly, because the first area information corresponds to the first identification information, and the first identification information may also represent the first sub-service area of the first multicast service to which the source access network device belongs, the first sub-service area may be determined based on the first identification information, and whether the target access network device is located within the first sub-service area is determined with reference to the location information of the target access network device.

It should be noted that, the target access network device may obtain the location information of the target access network device through preconfiguration, or from the mobility management network element, the session management network element, or the centralized storage network element. This is not specifically limited in this embodiment of this application.

Refer to Condition 2. Because the second area information represents the second sub-service area of the first multicast service to which the target access network device belongs, in other words, the second area information corresponds to the second sub-service area, the target access network device may determine, based on location information of the source access network device, whether the source access network device is located within the second sub-service area. If the source access network device is located within the second sub-service area corresponding to the second area information, it may be determined that the source access network device and the target access network device belong to a same sub-service area, so that it is determined that the target access network device needs to send the first data to the terminal device, and the first forwarding path through which the target access network device receives the multicast data from the source access network device needs be established. In this case, the target access network device sends a message of the first forwarding path.

Similarly, because second identification information corresponds to the second area information, and the second identification information may also represent the second sub-service area of the first multicast service to which the target access network device belongs, the second sub-service area may be determined based on the second identification information, and whether the source access network device is located within the second sub-service area is determined with reference to the location information of the source access network device.

Refer to Condition 3. The first identification information identifies the first data received by the terminal device by using the source access network device, and the second identification information identifies the second data received by the terminal device by using the target access network device. Therefore, if the first identification information corresponds to the second identification information, for example, the first identification information is the same as the second identification information, or there is a one-to-one mapping relationship between the first identification information and the second identification information, the target access network device may determine that the first data is the same as the second data, to determine that the target access network device needs to send the first data to the terminal device, and the first forwarding path through which the target access network device receives the multicast data from the source access network device needs to be established. In this case, the target access network device sends a message of the first forwarding path.

It should be noted that, when the multicast session identifiers are the same, the target access network device may further map the first identification information based on a configuration of the target access network device, and determine, based on the data flow identified by the mapped first identification information and the data flow identified by the second identification information, whether the first identification information corresponds to the second identification information. If the data flow identified by the mapped first identification information is the same as the data flow identified by the second identification information, the first identification information corresponds to the second identification information.

Refer to Condition 4. Whether the first area information corresponds to the second area information is determined based on the first area information and the second area information, so that it is determined whether the first sub-service area is the same as the second sub-service area and whether the first data is the same as the second data. If the first area information is the same as the second area information or there is a mapping relationship, the target access network device may determine that the first sub-service area is the same as the second sub-service area, and the first data is the same as the second data, to determine that the target access network device needs to send the first data to the terminal device, and the first forwarding path through which the target access network device receives the multicast data from the source access network device needs to be established. In this case, the target access network device sends a message of the first forwarding path.

Similarly, because the first area information corresponds to the first identification information, and the second identification information corresponds to the second area information, any area information in Condition 3 and Condition 4 may be replaced with the identification information corresponding to the area information, or any identification information is replaced with the area information corresponding to the identification information for determining. This is not specifically limited in this embodiment of this application.

In this way, whether the multicast data corresponding to the source access network device is the same as the multicast data corresponding to the target access network device may be quickly determined. In addition, the first forwarding path is established only when the two pieces of multicast data are the same, and the multicast data that has been received by the source access network device and has not been forwarded to the terminal device is received through the first forwarding path. This ensures reliability of the multicast service. In addition, when the two pieces of multicast data are different, the first forwarding path does not need to be established. This saves network resources, and improves transmission efficiency.

It should be noted that the target access network device may obtain the second identification information or the second area information from the multicast user plane network element, the multicast session management network element, or the centralized storage network element. This is not specifically limited in this embodiment of this application. If the first channel through which the target access network device receives the multicast data already exists, for example, before the terminal device is handed over to the target access network device, another terminal device within coverage of the target access network device has requested the session management network element to establish the channel through which the target access network device receives the multicast data, the target access network device may directly receive the second identification information or the second area information. If no first channel through which the target access network device receives the multicast data exists, the target access network device may establish the first channel, to obtain the second identification information or the second area information corresponding to the first channel. In addition, if no first path through which the target access network device receives the multicast data exists, the target access network device may not establish the second path, to obtain the second reference information, but directly determine, based on the first reference information, whether the first condition is met.

Optionally, that the target access network device sends information about a first forwarding path may include: The target access network device directly sends, to the source access network device, the information about the first forwarding path, for example, RAN 2→RAN 1. Alternatively, optionally, the target access network device sends the information about the first forwarding path to the AMF network element, so that the AMF network element requests the SMF network element to establish the first forwarding path: source access network device→user plane network element A target access network device.

It should be noted that, after the target access network device sends the information about the first forwarding path, the source access network device may send, to the target access network device based on the first reference information, the first data that has been received by the source access network and has not been forwarded to the terminal device. This ensures reliability of data transmission.

Optionally, the information about the first forwarding path may be carried in a first message, and the first message may further include the first reference information.

For example, the first message may be a message, for example, a handover request acknowledgment (handover request ack) message sent by the target access network device to the source access network device through the Xn interface, or may include a plurality of messages, for example, an N2 message sent by the target access network device to the mobility management network element through the N2 interface, for example, a path switch request (path switch request) message, and another N2 message sent by the mobility management network element to the source access network device, for example, a handover command (handover command) message. The information about the first forwarding path requests to establish the first forwarding path. The source access network device may determine, based on the information about the first forwarding path, that the target access network device has accepted a handover of the multicast session of the terminal device, and the terminal device needs the first data that has been received by the source access network device and has not been forwarded to the terminal device. The first reference information may represent the multicast data that is of the first multicast service and that is received by the terminal device from the source access network device. In this case, the source access network device may determine, based on the first reference information, that the terminal device has been handed over to the target access network device, and that the terminal device needs to receive the first data that has been received by the source access network device and has not been forwarded to the terminal device.

S303: The source access network device sends first data of the first multicast service to the target access network device through the first forwarding path.

For example, the first forwarding path may be a path through which the source access network device sends the first data to the target access network device, or may be a path through which the source access network device sends the first data to the core network element, and the core network element then sends the first data to the target access network device. The first data of the first multicast service is multicast data that has been received by the source access network device and has not been forwarded to the terminal device.

Optionally, the source access network device may directly send, to the target access network device through the first forwarding path, the first data that has been received by the source access network device and has not been forwarded to the terminal device. The source access network device may determine, based on the information about the first forwarding path, that the target access network device has accepted the handover of the multicast session of the terminal device, and the terminal device needs the first data that has been received by the source access network device and has not been forwarded to the terminal device. Therefore, the first data that has been received by the source access network device and has not been forwarded to the terminal device is sent to the target access network device through the first forwarding path.

Optionally, the communication method shown in FIG. 3 may further include: The source access network device obtains first reference information of the first multicast service. For example, the source access network device before the handover may join a procedure of the multicast session, to obtain the first reference information from a multicast session management network element, a multicast user plane network element, or a centralized storage network element.

Further, the communication method shown in FIG. 3 may specifically include: The source access network device sends the first data of the first multicast service to the target access network device based on the first reference information through the first forwarding path.

For example, the source access network device may determine, based on the first reference information, that the target access network device has accepted a handover of the multicast session of the terminal device, and then determine, based on the first reference information, whether the first data that has been received by the source access network device and has not been forwarded to the terminal device needs to be sent to the terminal device.

It should be noted that, the first reference information received by the source access network device by using a first message may be different from or may be the same as first reference information received by the target access network device by using a second message. In other words, the first reference information in the first message may be different from the first reference information in the second message. For example, the first reference information in the second message may include first identification information and first area information, and the first reference information in the first message may include only the first identification information, or may include only the first area information, or may include the first identification information and the first area information.

In a possible design solution, the first reference information includes the first identification information. In S303, that the source access network device sends first data of the first multicast service to the target access network device based on the first reference information through the first forwarding path may include: The source access network device sends, to the target access network device through the first forwarding path, the first data corresponding to the first identification information.

In another possible implementation, the first reference information includes first area information. In S303, that the source access network device sends first data of the first multicast service to the target access network device based on the first reference information through the first forwarding path may include: If determining, based on the first reference information, that the target access network device is located within a first sub-service area of the first multicast service to which the source access network device belongs, the source access network device may send the first data of the first multicast service to the target access network device through the first forwarding path.

For example, the first area information may represent the first sub-service area of the first multicast service to which the source access network device belongs. In this case, the source access network device may determine, based on location information of the target access network device, whether the target access network device is also located within the first sub-service area. The location information of the target access network device may be base station identification (RAN identification) information, cell identification (cell id), or a tracking area identity (tracking area ID). If both the source access network device and the target access network device belong to the first sub-service area, for example, the location information of the target access network device is one item in location information of the access network devices corresponding to the first sub-service area, or the location information of the target access network device matches one item in the first sub-service area, in other words, the multicast data corresponding to the target access network device is the same as the multicast data corresponding to the source access network device, the source access network device may send the first data to the target access network device through the first forwarding path. For a specific manner of determining that the target access network device is located within the first sub-service area, refer to Condition 1. Details are not described herein again.

It should be noted that the source access network device may obtain the location information of the target access network device from the centralized storage network element. A manner of obtaining the location information of the target access network device is not limited in this embodiment of this application.

In this way, when the target access network device is located within the first sub-service area of the first multicast service to which the source access network device belongs, the source access network device may send, to the target access network device through the first path, the first data that has been received and has not been forwarded to the terminal device, so that it is ensured that the terminal device handed over to the target access network device can receive the complete data. This ensures continuity of the multicast service. When the target access network device is not located within the first sub-service area, the source access network device may not send the first data that has been received and has not been forwarded to the terminal device. This avoids that the target access network device receives useless data, reduces occupied network resources, and improves transmission efficiency.

Optionally, the source access network device receives a first message.

For example, the first message may include a message of the first forwarding path, and may further include first reference information.

Optionally, a manner in which the source access network device receives a first message may include: The target access network device sends the first message to the source access network device, and the source access network device receives the first message from the target access network device.

For example, the first message may represent a session procedure in which the terminal device has been handed over to the target access network device. When determining that the first forwarding path needs to be established, the target access network device may send the first message to the source access network device, to request the source access network device to send, to the target access network device through the first forwarding path, the first data that needs to be forwarded.

Optionally, the target access network device may send the first message to the source access network device through an Xn interface, and the source access network device may receive the first message from the target access network device through the Xn interface. The Xn interface is an interface for communication between the access network devices.

Optionally, a core network element sends the first reference information to the source access network device, and the source access network device receives the first reference information of the first multicast service from the core network element.

For example, the core network element may be the AMF network element shown in FIG. 2. The target access network device may send the first message to the core network element, so that the source access network device may receive the first message from the core network element.

Optionally, the source access network device may send the first message to the source access network device through an N2 interface, and the source access network device may receive the first message from the core network element through the N2 interface. The N2 interface is an interface for communication between a mobility management network element (for example, the AMF) and the access network device.

It should be noted that, after receiving the first data of the first multicast service from the source access network device, the target access network device may directly send the first data to the terminal device, or may send the first data to the terminal device based on the second reference information. This ensures reliability of the multicast service.

In a possible implementation, the communication method further includes the following steps.

S304: The target access network device sends the first data of the first multicast service to the terminal device based on second reference information.

For example, the second reference information represents multicast data that is of the first multicast service and that is received by the terminal device from the target access network device, and the first data of the first multicast service is multicast data that has been received by the target access network device from the source access network device and has not been forwarded to the terminal device.

Optionally, the second reference information includes one or more of the following information: second identification information or second area information. The second identification information identifies a second data flow, and the second data flow is used by the target access network device to send second data of the first multicast service to the terminal device. The second area information represents a second sub-service area of the first multicast service to which the target access network device belongs. For specific content of the second identification information or the second area information, refer to related descriptions in S302. Details are not described herein again.

For example, the second reference information may be provided by the core network element. For example, the SMF network element sends an N2 path switch request acknowledgment (N2 path switch request ack) message to the target access network device by using the AMF network element. The N2 path switch request acknowledgment message may include the second reference information.

In this way, when determining that the multicast data corresponding to the source access network device is the same as the multicast data corresponding to the target access network, the target access network device may send, to the terminal device, the first data that has been received by the source access network device and has not been forwarded to the terminal device, so that the terminal device can receive the complete data. This ensures continuity of the multicast service. When determining that the multicast data corresponding to the source access network device is different from the multicast data corresponding to the target access network, the target access network device may not send the first data to the terminal device. This avoids that the terminal device receives incorrect multicast data, reduces a waste of network resources, and improves efficiency of data transmission.

In a possible design solution, in S304, that the target access network device sends the first data of the first multicast service to the terminal device based on second reference information may include: If determining, based on the second reference information, that a second condition is met, the target access network device sends the first data of the first multicast service to the terminal device. The second condition includes one or more of the following:
Condition 5: the source access network device is located within the second sub-service area; or
Condition 6: the source access network device is located within a sub-service area corresponding to the second identification information.

For specific implementations of Condition 5 and Condition 6, refer to the related content in Condition 2. Details are not described herein again.

In another possible design solution, the determining, based on the second reference information, that a second condition is met may specifically include: determining, based on the second identification information, that the source access network device is located within the sub-service area corresponding to the second identification information.

For example, the second identification information may identify the second data received by the terminal device in a session procedure corresponding to the target access network device. Both the second identification information and the second area information may identify the second data received by the terminal device in the session procedure corresponding to the target access network device, and there is a correspondence between the second identification information and the second area information. The target access network device may further determine, based on the second area information corresponding to the second identification information, the sub-service area corresponding to the second identification information, and then determine, based on location information of the source access network device, whether the source access network device is also located within the second sub-service area.

In this way, it can be quickly determined whether the multicast data corresponding to the source access network device is the same as the multicast data corresponding to the target access network device, so that the target access network device sends the first data to the terminal device only when the multicast data is the same. This ensures that the terminal device can receive the complete data, and ensures reliability of the multicast service. When the multicast data is different, the target access network device does not need to send the first data to the terminal device. This saves network resources, and improves transmission efficiency.

The following uses the 5G system shown in FIG. 2 as an example, to describe in detail a specific implementation of the communication method provided in embodiments of this application in the 5G system.

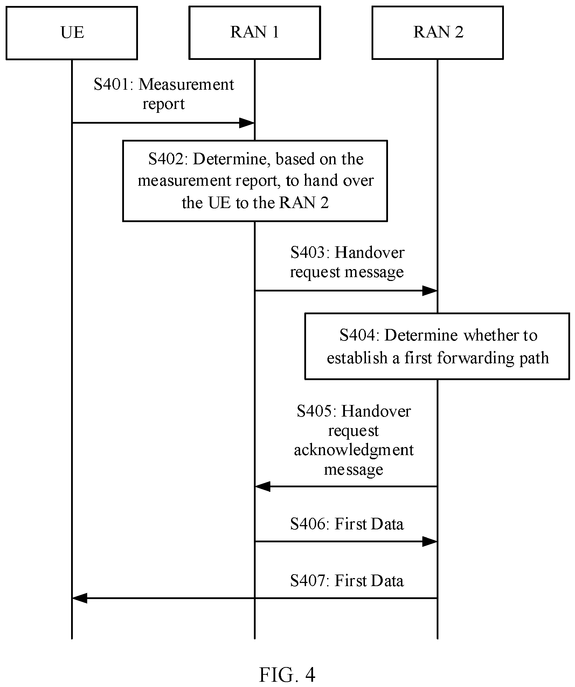

For example, FIG. 4 is a schematic flowchart 2 of a communication method according to an embodiment of this application. The communication method may be applied to the communication system shown in FIG. 2, to specifically implement the communication method shown in FIG. 3.

The terminal device shown in FIG. 3 may be a UE shown in FIG. 4, and the target access network device and the source access network device shown in FIG. 3 may be respectively a RAN 2 and a RAN 1 shown in FIG. 4.

As shown in FIG. 4, the communication method may include the following S401 to S407.

S401: The UE sends a measurement report to the RAN 1.

Specifically, the UE may send the measurement report of the UE to the RAN 1 based on configuration information preset by the RAN 1.

S402: The RAN 1 determines, based on the measurement report, to hand over the UE to the RAN 2.

Specifically, the RAN 1 may determine, based on the measurement report, whether the UE needs to be handed over, a handover occasion, and a target access network device or a cell to which the UE needs to be handed over, for example, the RAN 2 or a cell in the RAN 2.

S403: The RAN 1 sends a handover request message to the RAN 2.

The handover request message requests the RAN 2 to hand over the UE to the RAN 2, and may include identification information of the UE, identification information of a multicast service, and first identification information, for example, flow identification information.

Specifically, the RAN 1 may send the handover request message to the RAN 2 through an Xn interface.

The identification information of the UE may be device identification, application identification (application identification, APP ID), or the like. The identification information of the multicast service may be service identification information, identification information of a multicast session, IP triplet information (protocol version, local IP address, and local port number), a temporary mobile group identity (temporary mobile group identity, TMGI) of a multicast group, an IP address of an application server that provides multicast data, packet filter (packet filter) information of the multicast data, a service data flow (service data flow, SDF) identification rule of the multicast data, or the like. The first identification information identifies first data sent by the RAN 1 to the UE, and the first identification information may be identification information of a data flow for transmitting the first data. In a possible example, the first identification information is a location area identity (location area ID).

Optionally, if no Xn interface exists, the RAN 1 may send a handover request (handover request) message to an AMF network element, and the RAN 2 receives the handover request message from the AMF network element.

Specifically, the RAN 1 sends a path switch request (path switch request) message to the AMF network element through an N2 interface, and the RAN 2 receives a handover command (handover command) message from the AMF network element through another N2 interface.

S404: The RAN 2 determines whether to establish a first forwarding path.

The first forwarding path is used by the RAN 1 to send first data of a first multicast service to the RAN 2. The first forwarding path may be a path through which the RAN 1 directly sends the first data to the RAN 2, or may be a path through which the RAN 1 sends the first data to a UPF network element, and the UPF network element then sends the first data to the RAN 2.

Specifically, the RAN 2 may determine, depending on whether the RAN 2 supports multicast or the first identification information, whether to establish the first forwarding path. For a specific implementation of determining, based on the first identification information, whether to establish a first forwarding path, refer to S302. Details are not described herein again.

In a possible example, if the RAN 2 supports the multicast, and flow identification information of the RAN 1 is the same as that of the RAN 2, the RAN 2 establishes a channel for forwarding the first data from the RAN 1 to the RAN 2.

Alternatively, optionally, if flow identification information of the RAN 1 is the same as that of the RAN 2, the RAN 2 may alternatively establish a channel for forwarding the first data from the RAN 1 to the RAN 2.

Alternatively, optionally, if the RAN 2 supports the multicast, the RAN 2 establishes a channel for forwarding the first data from the RAN 1 to the RAN 2.

Alternatively, optionally, the RAN 2 may determine, based on the first identification information provided by the RAN 1, that the current flow identification information of the RAN 2 corresponds to same data of a same multicast service.

S405: The RAN 2 sends a handover request acknowledgment message to the RAN 1.

The handover request acknowledgment (handover request ack) message represents that the UE can be handed over to the RAN 2, and may include information about the first forwarding path, or may include the identification information of the multicast service and/or the first identification information.

Specifically, the information about the first forwarding path requests to establish a path through which the RAN 1 sends the data to the RAN 2, and the information about the first forwarding path may be a tunnel identifier, a tunnel endpoint identifier, or information about an IP address of the first forwarding path, or include multicast context information.

It should be noted that, if the Xn interface exists, the RAN 2 sends the handover request acknowledgment message to the RAN 1 through the Xn interface. If no Xn interface exists, the RAN 2 sends a handover command acknowledgment message to the AMF network element through the N2 interface, and the RAN 1 receives a path switch request acknowledgment message from the AMF network element through another N2 interface.

S406: The RAN 1 sends first data to the RAN 2.

Specifically, the RAN 1 may send the first data to the RAN 2 based on the information about the first forwarding path. Optionally, the RAN 1 may further determine, based on the identification information of the multicast service and/or the first identification information, whether to send the first data to the RAN 2. For a specific implementation, refer to S303. Details are not described herein again.

S407: The RAN 2 sends the first data to the UE.

Specifically, if the RAN 1 determines to send the first data to the RAN 2 through the first forwarding path in S406, the RAN 2 may forward the received first data to the UE. This ensures integrity of multicast data received by the UE and reliability of the multicast service.

It should be noted that, if the RAN 1 determines not to send the first data to the RAN 2 in S406, the RAN 2 does not receive the first data, and does not need to forward the first data to the UE. In other words, S407 may be considered as an optional step.

Optionally, the RAN 2 may further determine, based on second reference information, whether to send the first data to the UE. For a specific implementation, refer to S304. Details are not described herein again. It should be noted that, if the RAN 2 determines not to send the first data to the UE in S304, S407 may be considered as an optional step.

In this way, a procedure in which the UE is handed over to the RAN 2 can be completed, and it can be ensured that the UE can receive the complete multicast data, so that continuity and reliability of the multicast service are ensured, and it can be avoided that the UE receives incorrect data when the multicast data corresponding to the RAN 1 is different from the multicast data corresponding to the RAN 2. This saves transmission resources and improves transmission efficiency.

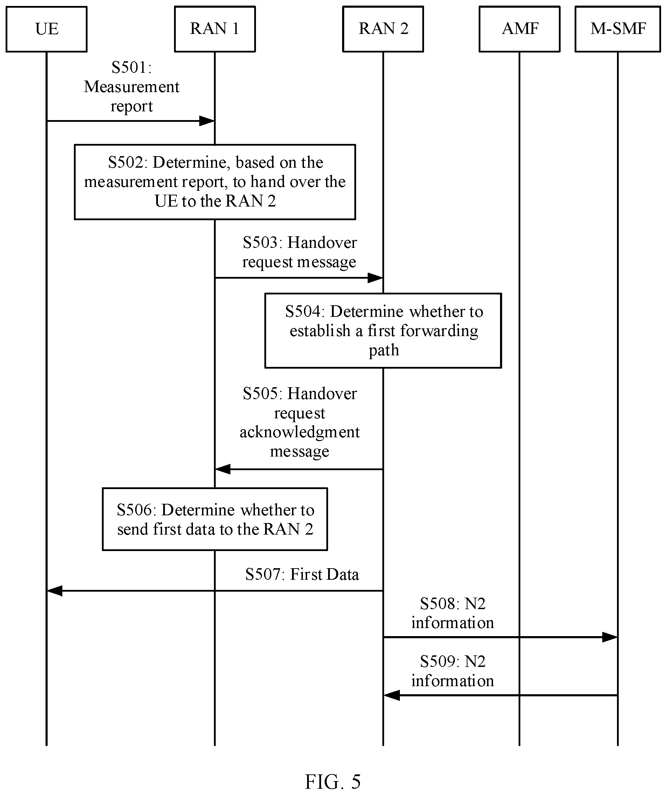

For example, FIG. 5 is a schematic flowchart 3 of a communication method according to an embodiment of this application. The communication method may be applied to the communication system shown in FIG. 2, to specifically implement the communication method shown in FIG. 3.

The terminal device shown in FIG. 3 may be a UE shown in FIG. 5, and the target access network device and the source access network device shown in FIG. 3 may be respectively a RAN 2 and a RAN 1 shown in FIG. 5.

As shown in FIG. 5, the communication method may include the following S501 to S509.

S501: The UE sends a measurement report to the RAN 1.

S502: The RAN 1 determines, based on the measurement report, to hand over the UE to the RAN 2.

For specific implementations of S501 and S502, refer to S401 and S402. Details are not described herein again.

S503: The RAN 1 sends a handover request message to the RAN 2.

The handover request message may include: identification information of the UE, identification information of a multicast service, and first identification information, for example, flow identification information and first area information, for example, sub-service area identification information.

Optionally, the handover request message may further include identification information of a multicast session management network element.

For a specific implementation of S503, refer to S403. Details are not described herein again.

S504: The RAN 2 determines whether to establish a first forwarding path.

Specifically, the RAN 2 may determine, depending on whether the RAN 2 supports multicast, the first identification information, or the first area information, whether to establish the first forwarding path. For a specific implementation of determining, based on the first identification information or the first area information, whether to establish a first forwarding path, refer to S302. Details are not described herein again.

In a possible example, when the RAN 2 does not receive data of the multicast service, if the RAN 2 supports the multicast, and the RAN 2 is located within a sub-service area identified by the first area information, the RAN 2 establishes a channel for forwarding first data from the RAN 1 to the RAN 2.

Alternatively, optionally, if the RAN 2 is located within a sub-service area identified by the first area information, the RAN 2 establishes a channel for forwarding first data from the RAN 1 to the RAN 2.

Alternatively, optionally, if the RAN 2 supports the multicast, the RAN 2 establishes a channel for forwarding the first data from the RAN 1 to the RAN 2.

S505: The RAN 2 sends a handover request acknowledgment message to the RAN 1.

S506: The RAN 1 determines whether to send first data to the RAN 2.

S507: The RAN 2 sends the first data to the UE.

For specific implementations of S505 to S507, refer to S405 to S407. Details are not described herein again.

It should be noted that, in a scenario in which the RAN 2 does not establish a multicast downlink transmission channel, S508 and S509 may be performed, to establish the multicast downlink transmission channel.

S508: The RAN 2 sends N2 information to an M-SMF network element by using an AMF network element.

The N2 information is used to establish the multicast downlink transmission channel through which the multicast user plane network element performs data transmission. The N2 information may include first channel information, or may include the identification information and/or session identification information of the multicast service.

Optionally, the N2 information may further include the identification information of the multicast session management network element, so that the AMF network element finds the corresponding M-SMF network element.

Specifically, the first channel information requests to establish the multicast downlink transmission channel through which the multicast user plane network element performs data transmission, for example, a channel: M-UPF network element→access network device or M-UPF network element→UPF network element→access network device. The first channel information may be a tunnel identifier, a tunnel endpoint identifier, or information about an IP address of the first channel, or include multicast context information.

S509: The M-SMF network element sends the N2 information to the RAN 2 by using the AMF network element.

The N2 information may include context information, and may further include the identification information of the multicast service and/or the first identification information.

Specifically, the context information is used to receive multicast data, and may specifically include: tunnel identification information, an identification rule and a forwarding rule of the multicast data, and quality of service (quality of service, QoS) information.

Further, the QoS information may include: an allocation and retention priority (allocation and retention priority, ARP), a guaranteed data flow bit rate (guaranteed flow bit rate, GFBR), a multicast/broadcast service function (multicast and broadcast service function, MFBR), and QoS data flow identification information.

Optionally, the N2 information may further include: second identification information and/or second area information. The second identification information identifies multicast data corresponding to the RAN 2, and the second area information identifies a sub-service area to which the RAN 2 belongs.

It should be noted that, if the handover request message in S503 does not include the identification information of the multicast session management network element, the RAN 2 cannot directly communicate with the M-SMF network element, but needs to first communicate with the SMF network element, to obtain the identification information of the M-SMF network element. If the RAN 2 has received a resource of the multicast service, in other words, the RAN 2 has established the first channel, the RAN 2 does not need to repeatedly establish the first channel. In other words, S508 and S509 may be considered as optional steps.

It should be further noted that, a sequence of determining whether to send the first data in S504 to S507 and establishing the first channel in S508 and S509 is not specifically limited in this embodiment of this application.

In this way, in the scenario in which the RAN 2 does not establish the multicast downlink transmission channel, a procedure in which the UE is handed over to the RAN 2 can be completed, and it is ensured that the UE can receive the complete multicast data, so that continuity and reliability of the multicast service are ensured, and it can be further avoided that the UE receives incorrect data when the multicast data corresponding to the RAN 1 is different from the multicast data corresponding to the RAN 2. This saves transmission resources and improves transmission efficiency.

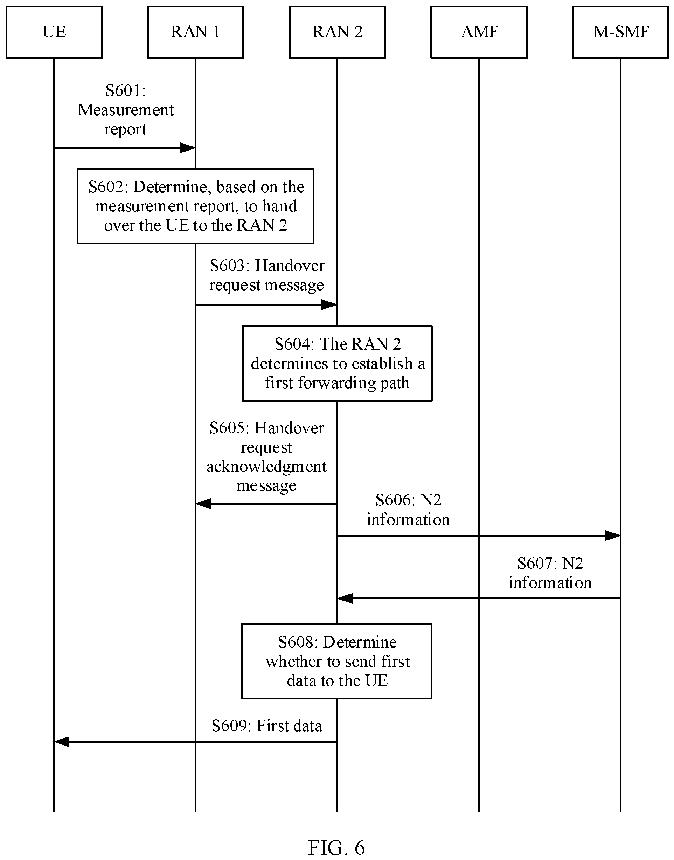

For example, FIG. 6 is a schematic flowchart 4 of a communication method according to an embodiment of this application. The communication method may be applied to the communication system shown in FIG. 2, to specifically implement the communication method shown in FIG. 3.

The terminal device shown in FIG. 3 may be a UE shown in FIG. 6, and the target access network device and the source access network device shown in FIG. 3 may be respectively a RAN 2 and a RAN 1 shown in FIG. 6.

As shown in FIG. 6, the communication method may include the following S601 to S609.

S601: The UE sends a measurement report to the RAN 1.

S602: The RAN 1 determines, based on the measurement report, to hand over the UE to the RAN 2.

For specific implementations of S601 and S602, refer to S401 and S402. Details are not described herein again.

S603: The RAN 1 sends a handover request message to the RAN 2.

The handover request message may include identification information of the UE and identification information of a multicast service.

Optionally, the handover request message may further include identification information of a multicast session management network element.

For a specific implementation of S603, refer to S403. Details are not described herein again.

S604: The RAN 2 determines to establish a first forwarding path.

After receiving the handover request message, the RAN 2 directly determines to establish the first forwarding path. The RAN 1 may send first data to the RAN 2 through the first forwarding path, and the RAN 2 buffers the received first data. For a specific implementation of the first forwarding path, refer to S302. Details are not described herein again.

S605: The RAN 2 sends a handover request acknowledgment message to the RAN 1.

The handover request acknowledgment information may include identification information of the terminal device, information about the first forwarding path, and the identification information of the multicast service.

Optionally, the handover request acknowledgment information may further include identification information of an M-SMF network element.

S606: The RAN 2 sends N2 information to an M-SMF network element by using an AMF network element.

S607: The M-SMF network element sends the N2 information to the RAN 2 by using the AMF network element.

For specific implementations of S606 and S607, refer to S508 and S509. Details are not described herein again.

The N2 information includes second area information. Optionally, the N2 information may further include second identification information.

S608: The RAN 2 determines whether to send first data to the UE.

Specifically, the RAN 2 may determine, based on the second area information and/or the second identification information in the N2 information in S606, whether to send the first data to the UE. For a specific implementation of determining, based on the second area information and/or the second identification information, whether to send first data to the UE, refer to S304. Details are not described herein again.

In a possible example, if determining, based on the second area information, that data flows corresponding to the RAN 1 and the RAN 2 are different, the RAN 2 does not send the first data to the UE, to avoid that the UE receives incorrect multicast data.

Further, when the data flows corresponding to the RAN 1 and the RAN 2 are different, the RAN 2 may notify the RAN 1 to stop sending the first data through the first forwarding path, or the RAN 2 may release a resource occupied by the first forwarding path, to ensure that the UE does not receive the incorrect multicast data.

In this way, the RAN 2 may determine, based on the second area information, whether to send the first data to the UE, so that it can be ensured that the UE can receive the complete multicast data, continuity and reliability of the multicast service are ensured, and it can be avoided that the UE receives incorrect data when the multicast data corresponding to the RAN 1 is different from the multicast data corresponding to the RAN 2. This saves transmission resources and improves transmission efficiency.

S609: The RAN 2 sends the first data to the UE.

For a specific implementation of S609, refer to S407. Details are not described herein again.

Based on the communication method shown in any one of FIG. 3 to FIG. 6, in a process in which the terminal device is handed over from the source access network device to the target access network device, the target access network device may determine, based on the first reference information, whether the multicast data corresponding to the source access network device is the same as the multicast data corresponding to the target access network device, to determine whether to request the source access network device to establish the first forwarding path, so that the target access network device obtains the first data of the first multicast service from the source access network device. In this way, if the multicast data corresponding to the source access network device is the same as the multicast data corresponding to the target access network device, the target access network device may receive, from the source access network device through the first forwarding path, the multicast data that has been received by the source access network device and has not been forwarded to the terminal device, to ensure that the terminal device can receive the complete multicast data. This ensures continuity and reliability of the multicast service. In addition, if the multicast data corresponding to the source access network device is different from the multicast data corresponding to the target access network device, the target access network device may not request to establish the forwarding path, therefore does not receive the multicast data that has been received by the source access network device and has not been forwarded to the terminal device, and does not send the multicast data to the terminal device, to ensure that the terminal device does not receive incorrect multicast data, and avoid a waste of network resources. This improves reliability and efficiency of the multicast service.

For example, FIG. 7 is a schematic flowchart 5 of a communication method according to an embodiment of this application. The communication method may be applied to the communication system shown in FIG. 1 or FIG. 2. The following uses the communication system shown in FIG. 1 as an example for description.

As shown in FIG. 7, the communication method is applied to a terminal device moving or handed over from a source access network device to a target access network device. The communication method includes the following steps.

S701: The source access network device determines that the target access network device is located within a third sub-service area of a second multicast service to which the source access network device belongs.

For example, the source access network device and the target access network device may be the RANs shown in FIG. 2. The second multicast service is similar to a first multicast service. For a specific implementation of the second multicast service, refer to the specific implementation of the first multicast service in S301. Details are not described herein again. The third sub-service area is one of a plurality of sub-service areas corresponding to a third multicast service, and all access network devices belonging to the third sub-service area send third data of the second multicast service to the terminal device. The third data is data that is of the second multicast service and that is received by the terminal device in a session procedure corresponding to the source access network device. The terminal device may be the UE shown in FIG. 2.

The multicast data transmitted by the access network devices to the terminal device may be distinguished from each other by distinguishing between sub-service areas to which the access network devices belong. Therefore, if it is determined that the target access network device is located within the third sub-service area to which the source access network device belongs, the multicast data corresponding to the target access network device is the same as multicast data corresponding to the source access network device, and the source access network device determines that forwarding indication information needs to be sent, to send, to the terminal device, the third data that is of the second multicast service and that has been received by the source access network device and has not been forwarded to the terminal device.

Optionally, the source access network device receives third area information, where the third area information represents the third sub-service area.

In a possible design method, S701 may include: The source access network device determines, based on the third area information, that the target access network device is located within the third sub-service area.

For example, the third area information represents the third sub-service area of the second multicast service to which the source access network device belongs, in other words, the third area information corresponds to the third sub-service area. If the source access network device may determine that the target access network device and the source access network device are located within a same sub-service area, the source access network device may send forwarding indication information to the target access network device, in other words, perform S702.

Optionally, the source access network device may obtain the third area information from a multicast user plane network element, a multicast session management network element, or a centralized storage network element. This is not specifically limited in this embodiment of this application.

S702: The source access network device sends forwarding indication information to the target access network device.

The forwarding indication information indicates the target access network device to establish a second forwarding path, and the second forwarding path is used by the source access network device to send third data of a second multicast service to the target access network device. For a specific implementation of the second forwarding path, refer to the related content of the first forwarding path. Details are not described herein again.

In a possible design solution, the forwarding indication information may include information about the second forwarding path sent by the target access network device to the source access network device, so that the second forwarding path: RAN 1→RAN 2 is established.

In another possible design solution, the forwarding indication information may include information about the second forwarding path sent by the target access network device to an AMF network element, so that the AMF network element requests an SMF network element to establish the second forwarding path: RAN 1→UPF network element A RAN 2.

S703: The source access network device sends third data of the second multicast service to the target access network device through a second forwarding path.

For example, the source access network device may send the third data to the target access network device through the second forwarding path, and the target access network device buffers the received third data, and may subsequently send the third data to the terminal device.

S704: The target access network device sends the third data of the second multicast service from the source access network device to the terminal device based on the forwarding indication information.

For example, the target access network device may determine, based on the forwarding indication information, that the second forwarding path needs to be established, so that the target access network device may receive the third data from the source access network device through the second forwarding path.

It should be noted that, after receiving the third data, the target access network device may directly send the third data to the terminal device, or may determine, based on the forwarding indication information, whether to send the third data to the terminal device. Optionally, the forwarding indication information may be carried in a third message, and the third message may further include the third area information.

In S704, that the target access network device sends the third data of the second multicast service from the source access network device to the terminal device based on the forwarding indication information may include: The target access network device determines, based on the third area information, that the target access network device is located within the third sub-service area. The target access network device sends the third data of the second multicast service from the source access network device to the terminal device.

For a specific implementation of determining, based on the third area information, that the target access network device is located within the third sub-service area, refer to step S701. Details are not described herein again.

In a possible design solution, the third message may further include identification information of the multicast session management network element. The communication method shown in FIG. 7 may further include: The target access network device sends second channel information to the multicast session management network element, where the second channel information is used by a multicast user plane network element to send fourth data of the second multicast service to the target access network device.

For example, the second channel information requests the multicast session management network element to establish a second channel, so that the target access network device receives the fourth data of the second multicast service from the multicast user plane network element through the second channel. The fourth data is multicast data that is of the second multicast service and that is received by the terminal device in a session of the target access network device. The second channel is similar to the first channel in step S301. For a specific implementation of the second channel, refer to the first channel in step S301. Details are not described herein again.

Optionally, the target access network device may send, to the multicast session management network element based on the identification information of the multicast session management network element, first channel information, for example, RAN 2→AMF network element→M-SMF network element, to avoid a problem that the second channel information can be sent to the multicast session management network element only after the identification information of the multicast session management network element is obtained from a unicast session management network element. This can reduce a quantity of signaling interactions, and improve efficiency of data transmission.

Optionally, the target access network device may further send the second channel information to a unicast SMF network element, and the unicast SMF network element then sends, to the multicast session management network element, the second channel information, for example, RAN 2→AMF network element→SMF network element→M-SMF network element, to request the multicast user plane network element to send the third data of the second multicast service to the target access network device through the second channel.

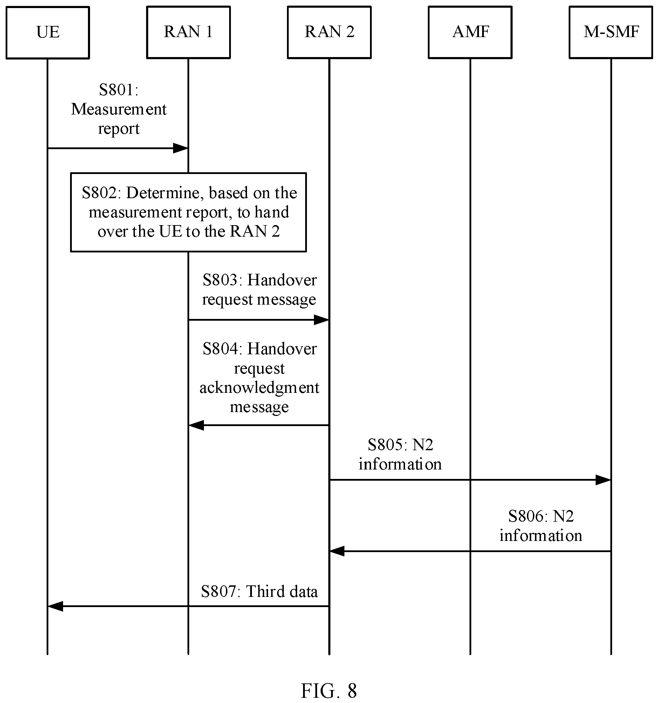

For example, FIG. 8 is a schematic flowchart 6 of a communication method according to an embodiment of this application. The communication method may be applied to the communication system shown in FIG. 2, to specifically implement the communication method shown in FIG. 7.

The terminal device shown in FIG. 7 may be a UE shown in FIG. 8, and the target access network device and the source access network device shown in FIG. 7 may be respectively a RAN 2 and a RAN 1 shown in FIG. 8.

As shown in FIG. 8, the communication method may include the following S801 to S807.

S801: The UE sends a measurement report to the RAN 1.

For a specific implementation of S801, refer to S401. Details are not described herein again.

S802: The RAN 1 determines, based on the measurement report, to hand over the UE to the RAN 2.

It should be noted that, the RAN 1 may directly determine whether the target access network device is located within a sub-service area corresponding to third area information. If the target access network device is located within the corresponding sub-service area, it is determined that a handover request in S803 includes forwarding indication information, which further indicates to establish a second forwarding path. For a specific implementation of determining whether the target access network device is located within a sub-service area corresponding to third area information, refer to S304. Details are not described herein again.

In a possible example, if the RAN 2 is within the sub-service area corresponding to the third area information, it is determined that the handover request includes the forwarding indication information, and the forwarding indication information indicates to establish the second forwarding path.

S803: The RAN 1 sends a handover request message to the RAN 2.

The handover request message may include identification information of the UE and identification information of a multicast service, or may include the forwarding indication information, or may include the third area information. The third area information represents a sub-service area corresponding to the RAN 1.

Specifically, the forwarding indication information indicates the RAN 2 to establish the second forwarding path. The RAN 2 may directly send received third data to the UE, or may send received third data to the UE based on the forwarding indication information or the third area information. The second forwarding path is similar to the first forwarding path. For a specific implementation of the second forwarding path, refer to S404. Details are not described herein again.

Optionally, the handover request message may further include identification information of a multicast session management network element.

S804: The RAN 2 sends a handover request acknowledgment message to the RAN 1.

The handover request acknowledgment message represents that the UE can be handed over to the RAN 2, and the handover request message may include information about the second forwarding path.

Optionally, the handover request acknowledgment message may include the identification information of the multicast service.

S805: The RAN 2 sends N2 information to an M-SMF network element by using an AMF network element.

S806: The M-SMF network element sends the N2 information to the RAN 2 by using the AMF network element.

S807: The RAN 2 sends third data to the UE.

For specific implementations of S805 to S807, respectively refer to S508, S509, and S507. Details are not described herein again.

Based on the communication method shown in FIG. 7 or FIG. 8, in a process in which the terminal device is handed over from the source access network device to the target access network device, the source access network device may determine whether the target access network device and the source access network device have a same sub-service area, to determine whether to request to establish the second forwarding path, so that the source access network device sends the third data of the second multicast service to the target access network device. In this way, if the target access network device and the source access network device have different sub-service areas, the multicast data corresponding to the source access network device is different from the multicast data corresponding to the target access network device, and the source access network device may send the forwarding indication information, to send, to the target access network device, the third data that has been received and has not been forwarded to the terminal device. This ensures continuity of the multicast service. In addition, it can also be avoided that unnecessary third data is transmitted to the terminal device. This avoids a waste of network resources.

For example, FIG. 9 is a schematic flowchart 7 of a communication method according to an embodiment of this application. The communication method may be applied to the communication system shown in FIG. 1 or FIG. 2. The following uses the communication system shown in FIG. 1 as an example for description.

As shown in FIG. 9, the communication method includes the following steps.

S901: A unicast session management network element sends location information of a terminal device to a multicast session management network element.

For example, the unicast session management network element may be an SMF network element, the multicast session management network element may be an M-SMF network element, and the terminal device may be the UE shown in FIG. 2. The location information of the terminal device may be cell identification (cell identification, CID) information, or may be a tracking area identity (tracking area identity, TAI), or may be identification information (RAN identification, RAN ID) of an access network device corresponding to the terminal device. The access network device may be the RAN shown in FIG. 2.

It should be noted that, the unicast session management network element may obtain the location information of the terminal device from the access network device or an AMF network element. This is not specifically limited in this embodiment of this application.

In this way, the unicast session management network element may request, by sending the location information of the terminal device, related information of corresponding multicast data from the multicast session management network element.

It should be noted that, the unicast session management network element may send the location information of the terminal device to the multicast session management network element through an N16 interface, or send the location information of the terminal device through a dedicated interface for communicating with the multicast session management network element.

Optionally, the unicast session management network element sends identification information of a third multicast service to the multicast session management network element, where the identification information of the third multicast service may identify a multicast service received by the terminal device. The identification information of the third multicast service may be service identification (service ID) information, multicast session identification (multicast session ID) information, internet protocol (internet protocol, IP) ternary group information (protocol version, local IP address, and local port number), identification information of the terminal device (such as device identification or application identification), a temporary mobile group identity (temporary mobile group identity, TMGI) of a multicast group, an IP address of an application server that provides the multicast data, packet filter (packet filter) information of multicast data, a service data flow (service data flow, SDF) identification rule of multicast data, or the like.

S902: The multicast session management network element sends third identification information to the unicast session management network element based on the location information of the terminal device.

The third identification information identifies a third data flow, and the third data flow is used by an access network device to send fifth data of a third multicast service to the terminal device.

For example, the third identification information may identify the fifth data that is of the third multicast service and that is received by the terminal device by using the access network device. The third identification information may identify the fifth data of the third multicast service by identifying the third data flow, in other words, the third identification information corresponds to the fifth data. The third multicast service is similar to a first multicast service and a second multicast service. For a specific implementation of the third multicast service, refer to the implementation of the first multicast service in S301. Details are not described herein again. The fifth data is data that is of the third multicast service and that is received by the terminal device by using a session corresponding to the access network device.

Optionally, the multicast session management network element may determine, based on the location information of the terminal device and the identification information of the multicast service, a sub-service area of the third multicast service to which the access network device belongs, to determine third identification information corresponding to the sub-service area.

Optionally, the multicast session management network element pre-determines context information of the corresponding third multicast service based on the identification information of the third multicast service, which includes identification information of a plurality of data flows and corresponding area information. The multicast session management network element may determine the corresponding third identification information from the context information of the third multicast service based on the location information of the terminal device.

In this way, the multicast session management network element may return, to the unicast session management network element, the third identification information corresponding to the location information of the terminal device, so that the unicast session management network element determines whether a downlink channel through which the multicast user plane network element performs data transmission, for example, a downlink channel: M-UPF network element→access network device or M-UPF network element→UPF network element→access network device, needs to be established.

In a possible design solution, the third identification information may be carried in a fourth message, the fourth message may further include fourth area information, and the fourth area information represents a fourth sub-service area of the third multicast service to which the access network device belongs.

For example, the fourth area information represents the fourth sub-service area of the third multicast service to which the source access network device belongs, in other words, the fourth area information corresponds to the fourth sub-service area. If determining that the access network device is located within the fourth sub-service area, the unicast session management network element may determine that the downlink channel through which the multicast user plane network element performs data transmission needs to be established.

It should be noted that, the unicast session management network element may send the location information of the terminal device to the multicast session management network element through the N16 interface.

Optionally, the communication method shown in FIG. 9 may further include the following steps.

S903: The unicast session management network element sends the third identification information to an access network device.

For example, the third identification information corresponds to the fifth data of the third multicast service. If determining that the fifth data is the same as data received by the access network device, the access network device may determine that the downlink channel through which the multicast user plane network element performs data transmission needs to be established, so that it is ensured that the terminal device can receive the multicast data.

Optionally, the third identification information may be carried in a fifth message, and the fifth message may further include fourth area information.

For example, the fifth message is used by the access network device to determine whether to establish the downlink channel for data transmission. If determining, by using the fourth area information, that the access network device is located within the fourth sub-service area, the access network device determines that the downlink channel for data transmission needs to be established, so that the terminal device may receive the data of the third multicast service from the access network device. Optionally, the fifth message may include a plurality of messages, for example, an N11 message sent by the M-SMF network element to the AMF network element, and an N2 message sent by the AMF network element to the RAN.

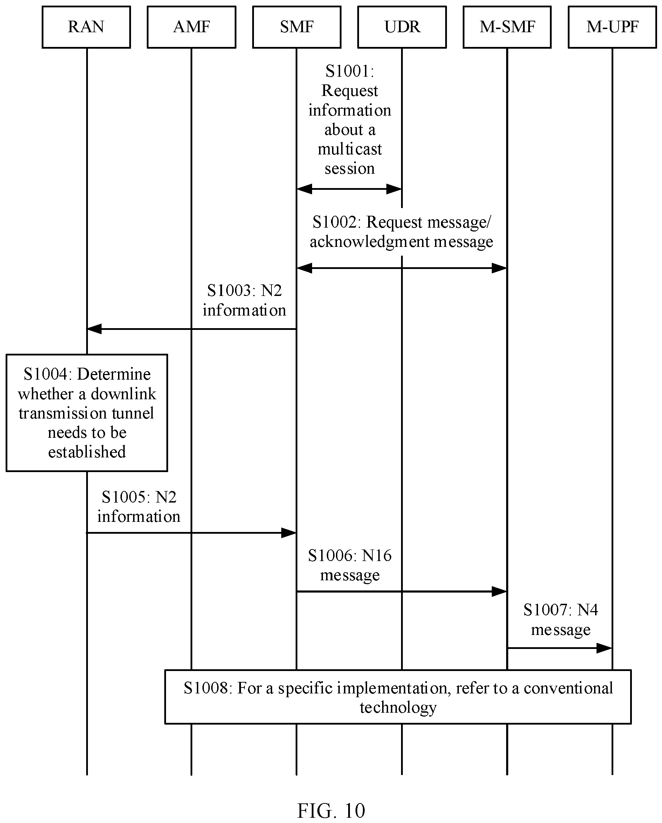

For example, FIG. 10 is a schematic flowchart 7 of a communication method according to an embodiment of this application. The communication method may be applied to the communication system shown in FIG. 2, to specifically implement the communication method shown in FIG. 9.

The access network device shown in FIG. 9 may be a RAN shown in FIG. 10, and the unicast session management network element and the multicast session management network element shown in FIG. 9 may be respectively an SMF network element and an M-SMF network element shown in FIG. 10.

As shown in FIG. 10, the communication method may include the following S1001 to S1008.

Specifically, after receiving a multicast session join request message from the UE, a core network element, for example, the SMF network element performs the communication method shown in FIG. 10. The multicast session join request may be an internet group management protocol join (internet group management protocol join, IGMP join) request message, or may be a PDU session modification request message.

The IGMP join request message may include PDU session identification (PDU session ID) information and multicast context identification (multicast context ID) information.

S 1001: The SMF network element requests information about a multicast session from a UDR network element.

Specifically, the request message sent by the SMF network element to the UDR network element carries identification information of a multicast service, and the UDR network element may return, to the SMF network element, the information about the multicast session corresponding to the multicast service, for example, identification information of the multicast session management network element.

The identification information of the multicast session management network element may be internet protocol address information, or may be fully qualified domain name (fully qualified domain name, FQDN) information.

It should be noted that, the identification information of the multicast session management network element may be determined based on information preconfigured by the UDR network element, or may be identification information of the M-SMF network element that is pre-stored to the UDR network element by another multicast service control network element after the SMF network element is selected, or may be identification information of the SMF network element corresponding to a UE that first joins a multicast session.

Optionally, the SMF network element requests the information about the multicast session from the UDR network element through an N10 message.

S1002: The SMF network element sends a request message to the M-SMF network element, and the SMF network element receives an acknowledgment message from the M-SMF network element.

The request message may include location information of a terminal device, and may further include the identification information of the multicast service.

Specifically, the location information of the terminal device may be cell identification (cell identification, CID) information, or may be a tracking area identity (tracking area identity, TAI), or may be identification information of an access network device corresponding to the terminal device.

It should be noted that, the acknowledgment message returned by the M-SMF network element to the SMF may include the identification information of the multicast service, quality of service (quality of Service, QoS) information, and third identification information.

Specifically, the QoS information includes: an allocation and retention priority (allocation and retention priority, ARP), a guaranteed data flow bit rate (guaranteed flow bit rate, GFBR), a multicast/broadcast service function (multicast and broadcast service function, MFBR), and QoS data flow identification information.

The third identification information identifies fifth data that is of a third multicast service and that is sent by the access network device to the terminal device. In this way, the M-SMF network element may return, to the SMF network element based on the location information of the terminal device and the identification information of the multicast service, the third identification information corresponding to the access network device. For a specific implementation of determining the third identification information based on the location information of the terminal device and the identification information of the multicast service, refer to S902. Details are not described herein again.

Optionally, the acknowledgment message returned by the M-SMF network element to the SMF may further include fourth area information, and the fourth area information represents a fourth sub-service area of the third multicast service to which the access network device belongs.

S1003: The SMF network element sends N2 information to the RAN by using an AMF network element.

The N2 information may include the information sent by the M-SMF network element to the SMF in S 1002. Details are not described herein again.

The N2 information may further include identification information of a PDU session, and the identification information of the PDU session may be obtained from the session join request sent by the UE to the core network element.

It should be noted that, the SMF network element sends the N2 information to the RAN by using the AMF network element.

S1004: The RAN determines, based on the N2 information, whether a downlink transmission tunnel needs to be established.

Specifically, the RAN may determine, based on the identification information of the multicast service and/or the third identification information, whether the downlink transmission channel is needed currently. For a specific implementation in which the RAN determines whether a downlink transmission channel needs to be established, refer to S903. Details are not described herein again.

S1005: The RAN sends the N2 information to the SMF network element by using the AMF network element.

The N2 information may carry information about the downlink transmission tunnel corresponding to the multicast service, and the downlink transmission channel may be M-UPF→RAN. For a specific implementation of the downlink transmission channel, refer to S903. Details are not described herein again.

S1006: The SMF network element sends an N16 message to the M-SMF network element.

The N16 information includes the information about the downlink transmission tunnel.

S1007: The M-SMF network element sends an N4 message to an M-UPF network element.

The N4 message is used to configure a specific implementation in which the M-UPF network element sends data to the RAN. The N4 message may include one or more of the following information:
identification information of multicast data, for example, internet protocol (internet protocol, IP) triplet information (protocol version, local IP address, and local port number), or forwarding information of the multicast data. The forwarding information of the multicast data is used by the UPF network element to determine a mapping relationship between the data and a resource, or a QoS enforcement rule (QoS enforcement rule, QER) of the multicast data, for example, to ensure QoS during multicast data processing and transmission, or a destination address for forwarding the multicast data.

Optionally, the destination address for forwarding the multicast data may be determined based on the information about the downlink transmission tunnel received by the M-SMF network element in S 1006.

S1008: For a specific implementation, refer to a conventional technology. A configuration procedure of a remaining downlink transmission tunnel is consistent with that in the conventional technology. Details are not described again in this embodiment of this application.

Based on the communication method shown in FIG. 9 or FIG. 10, the multicast session management network element may return, to the unicast session management network element, the third identification information corresponding to the location information of the terminal device, so that the access network device determines whether the downlink channel through which the multicast user plane network element performs data transmission needs to be established. In this way, this can avoid a waste of network resources while ensuring reliability of multicast data transmission, and improve efficiency of the data transmission.

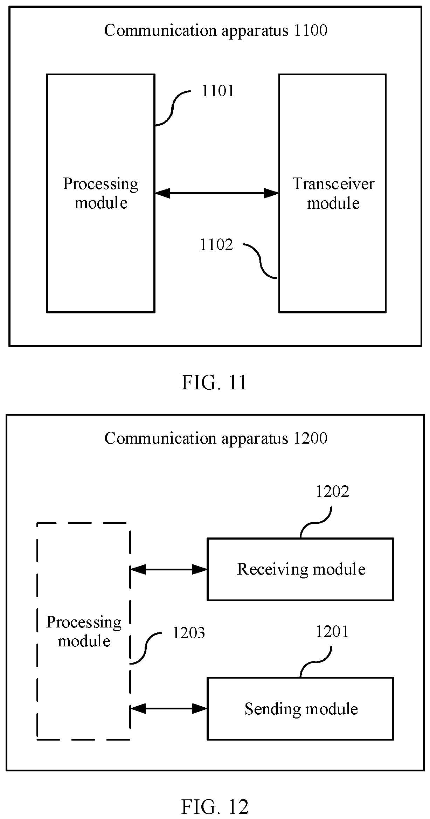

The foregoing describes, in detail with reference to FIG. 3 to FIG. 10, the communication methods provided in embodiments of this application. The following describes, in detail with reference to FIG. 11 to FIG. 13, communication apparatuses configured to perform the communication methods provided in embodiments of this application.

For example, FIG. 11 is a schematic diagram 1 of a structure of a communication apparatus according to an embodiment of this application. As shown in FIG. 11, the communication apparatus 1100 may be applied to a terminal device moving or handed over from a source access network device to a target access network device. The communication apparatus 1100 includes: a processing module 1101 and a transceiver module 1102.

In some embodiments, the communication apparatus 1100 may be applied to the communication system shown in FIG. 1, and perform a function of the target access network device in the communication method shown in FIG. 3; or may be applied to the communication system shown in FIG. 2, and may be configured to perform a function of the RAN 2 in the communication method shown in any one of FIG. 4 to FIG. 6.

The processing module 1101 is configured to obtain first reference information of a first multicast service.

The processing module 1101 is further configured to control, based on the first reference information, the transceiver module 1102 to send information about a first forwarding path, where the first forwarding path is used by the target access network device to receive first data of the first multicast service.

In a possible design solution, the first reference information includes one or more of the following information: first identification information, first area information, or identification information of the first multicast service. The first identification information identifies a first data flow, and the first data flow is used by the source access network device to send the first data of the first multicast service to the terminal device. The first area information represents a first sub-service area of the first multicast service to which the source access network device belongs.

In a possible design solution, the processing module 1101 is further configured to determine, based on the first reference information, that a first condition is met. The first condition may include one or more of the following: the target access network device is located within the first sub-service area; the source access network device is located within a second sub-service area of the first multicast service to which the target access network device belongs; the first identification information corresponds to second identification information, the second identification information identifies a second data flow, and the second data flow is used by the target access network device to send second data of the first multicast service to the terminal device; or the first area information corresponds to second area information, and the second area information represents a second sub-service area of the first multicast service to which the target access network device belongs. The transceiver module 1102 is further configured to send the information about the first forwarding path.

Optionally, the first area information identifies the first data, and the first area information corresponds to the first identification information.

Optionally, the information about the first forwarding path may be carried in a first message, and the first message may further include the first reference information.

Optionally, the transceiver module 1102 is further configured to receive the first reference information.

In a possible design solution, the transceiver module 1102 is further configured to receive the first data of the first multicast service from the source access network device through the first forwarding path. The processing module 1101 is further configured to control, based on second reference information, the transceiver module 1102 to send the first data of the first multicast service to the terminal device.

In a possible design solution, the second reference information may include one or more of the following information: second identification information or second area information. The second identification information identifies a second data flow, and the second data flow is used by the target access network device to send second data of the first multicast service to the terminal device; and the second area information represents a second sub-service area of the first multicast service to which the target access network device belongs.

In a possible design solution, the processing module 1101 is further configured to determine, based on the second reference information, that a second condition is met. The second condition may include one or more of the following: the source access network device is located within the second sub-service area; or the source access network device is located within a sub-service area corresponding to the second identification information. The transceiver module 1102 is further configured to send the first data of the first multicast service to the terminal device.

Optionally, the transceiver module 1102 is further configured to receive the second reference information from a multicast session management network element.

Further, the first reference information may be carried in a second message, where the second message may further include identification information of a multicast session management network element. Correspondingly, the transceiver module 1102 is further configured to send first channel information to the multicast session management network element, where the first channel information is used by a multicast user plane network element to send the second data of the first multicast service to the target access network device.

Optionally, the transceiver module 1102 may include: a receiving module and a sending module (not separately shown in FIG. 11). The receiving module and the sending module are respectively configured to implement a receiving function and a sending function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform the communication method shown in any one of FIG. 3 to FIG. 6.

It should be noted that, the communication apparatus 1100 may be an access network device, for example, a target access network device, or may be a chip (system) or another component or assembly that may be disposed in an access network device. This is not limited in this application.

In addition, for a technical effect of the communication apparatus 1100, refer to the technical effect of the communication method shown in any one of FIG. 3 to FIG. 6. Details are not described herein again.

In some other embodiments, the communication apparatus 1100 may be applied to the communication system shown in FIG. 1, and perform a function of the source access network device in the communication method shown in FIG. 3; or may be applied to the communication system shown in FIG. 2, and perform a function of the RAN 1 in the communication method shown in any one of FIG. 4 to FIG. 6.

The transceiver module 1102 is configured to receive information about a first forwarding path.

The processing module 1101 is configured to control the transceiver module 1102 to send first data of a first multicast service to the target access network device through the first forwarding path.

In a possible design solution, the processing module 1101 is further configured to obtain first reference information of the first multicast service.

The processing module 1101 is further configured to control, based on the first reference information, the transceiver module 1102 to send the first data of the first multicast service to the target access network device through the first forwarding path.

Optionally, the information about the first forwarding path may be carried in a first message, and the first message may further include the first reference information.

Optionally, the first reference information may include one or more of the following information: first identification information, first area information, or identification information of the first multicast service. The first identification information identifies a first data flow, and the first data flow is used by the source access network device to send the first data of the first multicast service to the terminal device. The first area information represents a first sub-service area of the first multicast service to which the source access network device belongs.

Optionally, the first reference information may include first identification information. Correspondingly, the transceiver module 1102 is further configured to send, to the target access network device through the first forwarding path, the first data corresponding to the first identification information.

Alternatively, optionally, the first reference information may include first area information. Correspondingly, the processing module 1101 is further configured to determine, based on the first reference information, that the target access network device is located within a first sub-service area of the first multicast service to which the source access network device belongs. The processing module 1101 is further configured to control the transceiver module 1102 to send the first data of the first multicast service to the target access network device through the first forwarding path.

In a possible design solution, the transceiver module 1102 is further configured to send the first reference information.

Optionally, the first reference information may be carried in a second message, where the second message may further include identification information of a multicast session management network element.

Optionally, the transceiver module 1102 may include: a receiving module and a sending module. The receiving module and the sending module are respectively configured to implement a receiving function and a sending function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform the communication method shown in any one of FIG. 3 to FIG. 6.

It should be noted that, the communication apparatus 1100 may be an access network device, for example, a source access network device, or may be a chip (system) or another component or assembly that may be disposed in an access network device. This is not limited in this application.

In addition, for a technical effect of the communication apparatus 1100, refer to the technical effect of the communication method shown in any one of FIG. 3 to FIG. 6. Details are not described herein again.

In yet some embodiments, the communication apparatus 1100 may be applied to the communication system shown in FIG. 1, and perform a function of the source access network device in the communication method shown in FIG. 7; or may be applied to the communication system shown in FIG. 2, and perform a function of the RAN 1 in the communication method shown in FIG. 8.

The processing module 1101 is configured to determine that the target access network device is located within a third sub-service area of a second multicast service to which the source access network device belongs.

The transceiver module 1102 is configured to send forwarding indication information to the target access network device. The forwarding indication information indicates the target access network device to establish a second forwarding path, and the second forwarding path is used by the source access network device to send third data of a second multicast service to the target access network device.

In a possible design solution, the transceiver module 1102 is further configured to receive third area information, where the third area information represents the third sub-service area. The processing module 1101 is further configured to determine, based on the third area information, that the target access network device is located within the third sub-service area.

Optionally, the forwarding indication information may be carried in a third message, and the third message may further include identification information of a multicast session management network element.

Optionally, the transceiver module 1102 may include: a receiving module and a sending module (not separately shown in FIG. 11). The receiving module and the sending module are respectively configured to implement a receiving function and a sending function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform the communication method shown in FIG. 7 or FIG. 8.

It should be noted that, the communication apparatus 1100 may be an access network device, for example, a source access network device, or may be a chip (system) or another component or assembly that may be disposed in an access network device. This is not limited in this application.

In addition, for a technical effect of the communication apparatus 1100, refer to the technical effect of the communication method shown in FIG. 7 or FIG. 8. Details are not described herein again.

In some embodiments, the communication apparatus 1100 may be applied to the communication system shown in FIG. 1, and perform a function of the target access network device in the communication method shown in FIG. 7; or may be applied to the communication system shown in FIG. 2, and perform a function of the RAN 2 in the communication method shown in FIG. 8.

The transceiver module 1102 is configured to receive forwarding indication information from the source access network device, where the forwarding indication information indicates the target access network device to establish a second forwarding path, and the second forwarding path is used by the source access network device to send third data of a second multicast service to the target access network device.

The processing module 1101 is further configured to control, based on the forwarding indication information, the transceiver module 1102 to send the third data of the second multicast service from the source access network device to the terminal device.

In a possible design solution, the forwarding indication information may be carried in a third message, and the third message may further include identification information of a multicast session management network element. Correspondingly, the transceiver module 1102 is further configured to send second channel information to the multicast session management network element, where the second channel information is used by a multicast user plane network element to send fourth data of the second multicast service to the target access network device.

Optionally, the transceiver module 1102 may include: a receiving module and a sending module (not separately shown in FIG. 11). The receiving module and the sending module are respectively configured to implement a receiving function and a sending function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform the communication method shown in FIG. 7 or FIG. 8.

It should be noted that, the communication apparatus 1100 may be an access network device, for example, a target access network device, or may be a chip (system) or another component or assembly that may be disposed in an access network device. This is not limited in this application.

In addition, for a technical effect of the communication apparatus 1100, refer to the technical effect of the communication method shown in FIG. 7 or FIG. 8. Details are not described herein again.

For example, FIG. 12 is a schematic diagram 2 of a structure of a communication apparatus according to an embodiment of this application. As shown in FIG. 12, the communication apparatus 1200 is applied to a terminal device moving from a source access network device to a target access network device. The communication apparatus 1200 includes: a sending module 1201 and a receiving module 1202.

In this embodiment of this application, the communication apparatus 1200 may be applied to the communication system shown in FIG. 1, and perform a function of the unicast session management network element in the communication method shown in FIG. 9; or may be applied to the communication system shown in FIG. 2, and perform a function of the SMF network element in the communication method shown in FIG. 10.

The sending module 1201 is configured to send location information of a terminal device to a multicast session management network element.

The receiving module 1202 is configured to receive third identification information from the multicast session management network element. The third identification information identifies a third data flow, and the third data flow is used by an access network device to send fifth data of a third multicast service to the terminal device.

In a possible design solution, the third identification information may be carried in a fourth message, the fourth message may further include fourth area information, and the fourth area information represents a fourth sub-service area of the third multicast service to which the access network device belongs.

In a possible design solution, the sending module 1201 is further configured to send third identification information to the access network device.

Optionally, the third identification information may be carried in a fifth message, and the fifth message may further include fourth area information.

Optionally, the sending module 1201 and the receiving module 1202 may alternatively be integrated into one module, for example, a transceiver module. The transceiver module is configured to implement a sending function and a receiving function of the communication apparatus 1200.

Optionally, the communication apparatus 1200 may further include: a processing module 1203 (shown in a dashed box in FIG. 12) and a storage module (not shown in FIG. 12). The storage module stores a program or instructions. When the processing module 1203 executes the program or the instructions, the communication apparatus 1200 is enabled to perform the communication method shown in FIG. 9 or FIG. 10.

It should be noted that the communication apparatus 1200 may be a unicast session management network element, for example, an SMF network element, or may be a chip (system) or another component or assembly that may be disposed in a unicast session management network element. This is not limited in this application.

In addition, for a technical effect of the communication apparatus 1200, refer to the technical effect of the communication method shown in FIG. 9 or FIG. 10. Details are not described herein again.

In still some embodiments, the communication apparatus 1100 may be applied to the communication system shown in FIG. 1, and perform a function of the multicast session management network element in the communication method shown in FIG. 9; or may be applied to the communication system shown in FIG. 2, and perform a function of the M-SMF network element in the communication method shown in FIG. 10.

The transceiver module 1102 is configured to receive location information of a terminal device from a unicast session management network element.

The processing module 1101 is configured to control, based on the location information of the terminal device, the transceiver module 1102 to send third identification information to the unicast session management network element. The third identification information identifies a third data flow, and the third data flow is used by an access network device to send fifth data of a third multicast service to the terminal device.

In a possible design solution, the third identification information may be carried in a fourth message, the fourth message further includes fourth area information, and the fourth area information represents a fourth sub -service area of the third multicast service to which the access network device belongs.

Optionally, the transceiver module 1102 may include: a receiving module and a sending module (not separately shown in FIG. 11). The receiving module and the sending module are respectively configured to implement a receiving function and a sending function of the communication apparatus 1100.

Optionally, the communication apparatus 1100 may further include a storage module (not shown in FIG. 11). The storage module stores a program or instructions. When the processing module 1101 executes the program or the instructions, the communication apparatus 1100 is enabled to perform the communication method shown in FIG. 9 or FIG. 10.

It should be noted that the communication apparatus 1100 may be a multicast session management network element, for example, an M-SMF network element, or may be a chip (system) or another component or assembly that may be disposed in a multicast session management network element. This is not limited in this application.

In addition, for a technical effect of the communication apparatus 1100, refer to the technical effect of the communication method shown in FIG. 9 or FIG. 10. Details are not described herein again.

It should be noted that, the processing module in each communication apparatus shown in FIG. 11 or FIG. 12 may be implemented by a processor or a processor-related circuit component, and may be a processor or a processing unit. The receiving module, the sending module, and the transceiver module may be implemented by a transceiver or a transceiver-related circuit component, and may be a transceiver or a transceiver unit. The following provides descriptions with reference to an example.

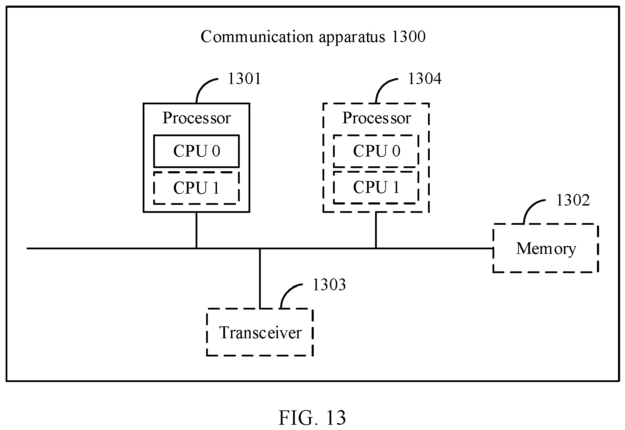

For example, FIG. 13 is a schematic diagram 3 of a structure of a communication apparatus according to an embodiment of this application. The communication apparatus may be a terminal device or a network device, or may be a chip (system) or another component or assembly that may be disposed in a terminal device or a network device. As shown in FIG. 13, the communication apparatus 1300 may include a processor 1301. Optionally, the communication apparatus 1300 may further include: a memory 1302 and/or a transceiver 1303. The processor 1301 is coupled to the memory 1302 and the transceiver 1303, for example, may be connected to the memory 1302 and the transceiver 1303 through a communication bus.

The following specifically describes each component of the communication apparatus 1300 with reference to FIG. 13.

The processor 1301 is a control center of the communication apparatus 1300, and may be one processor, or may be a collective term of a plurality of processing elements. For example, the processor 1301 is one or more central processing units (central processing units, CPUs), or may be an application-specific integrated circuit (application-specific integrated circuit, ASIC), or is configured as one or more integrated circuits implementing embodiments of this application, for example, one or more microprocessors (digital signal processors, DSPs) or one or more field programmable gate arrays (field programmable gate arrays, FPGAs).

Optionally, the processor 1301 may run or execute a software program stored in the memory 1302, and invoke data stored in the memory 1302, to perform various functions of the communication apparatus 1300.

During specific implementation, in an embodiment, the processor 1301 may include one or more CPUs, such as a CPU 0 and a CPU 1 shown in FIG. 13.

During specific implementation, in an embodiment, the communication apparatus 1300 may alternatively include a plurality of processors, such as the processor 1301 and the processor 1304 shown in FIG. 13. Each of the processors may be a single-core processor (single-CPU) or may be a multi-core processor (multi-CPU). The processor herein may be one or more devices, circuits, and/or processing cores configured to process data (for example, computer program instructions).

The memory 1302 is configured to store the software program for executing the solutions in this application, and the processor 1301 controls execution. For a specific implementation, refer to the foregoing method embodiments. Details are not described herein again.

Optionally, the memory 1302 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer, but is not limited thereto. The memory 1302 may be integrated with the processor 1301, or may exist independently, and is coupled to the processor 1301 through an interface circuit (not shown in FIG. 13) of the communication apparatus 1300. This is not specifically limited in this embodiment of this application.

The transceiver 1303 is configured to communicate with another communication apparatus. For example, the communication apparatus 1300 is a terminal device, and the transceiver 1303 may be configured to communicate with a network device or communicate with another terminal device. For another example, the communication apparatus 1300 is a network device, and the transceiver 1303 may be configured to communicate with a terminal device or communicate with another network device.

Optionally, the transceiver 1303 may include: a receiver and a transmitter (not separately shown in FIG. 13). The receiver is configured to implement a receiving function, and the transmitter is configured to implement a sending function.

Optionally, the transceiver 1303 may be integrated with the processor 1301, or may exist independently, and is coupled to the processor 1301 through an interface circuit (not shown in FIG. 13) of the communication apparatus 1300. This is not specifically limited in this embodiment of this application.

It should be noted that, the structure of the communication apparatus 1300 shown in FIG. 13 does not constitute a limitation on the communication apparatus. An actual communication apparatus may include more or fewer components than those shown in the figure, combine some components, or have different component arrangement.

In addition, for a technical effect of the communication apparatus 1300, refer to the technical effect of the communication method in the foregoing method embodiments. Details are not described herein again.

An embodiment of this application further provides a chip system, including a processor, where the processor is coupled to a memory. The memory is configured to store a program or instructions. When the program or the instructions are executed by the processor, the chip system is enabled to implement the method according to any one of the foregoing method embodiments.

Optionally, there may be one or more processors in the chip system. The processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory.

Optionally, there may alternatively be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

An embodiment of this application provides a communication system. The communication system includes one or more terminal devices and one or more access network devices such as a source access network device and a target access network device.

Optionally, the communication system may further include one or more core network elements such as a unicast session management network element and a multicast session management network element.

It should be understood that, the processor in embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor, or the like.

It may further be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of random access memories (random access memories, RAMs) are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium that can be accessed by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" refers to one or more, and "a plurality of" refers to two or more. "At least one of the following items (pieces)" or a similar expression thereof indicates any combination of these items, including a single item (piece) or any combination of a plurality of items (pieces). For example, at least one item (piece) of a, b, or c may indicate: a, b, c, a-b, a-c, b-c, or a-b-c, where a, b, and c may be singular or plural.

It should be understood that in embodiments of this application, sequence numbers of the foregoing processes do not mean an execution sequence. An execution sequence of the processes should be determined based on functions and internal logic of the processes, and should not constitute any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, to be specific, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a terminal device moving from a source access network device to a target access network device, wherein the method comprises:
obtaining, by the target access network device, first reference information of a first multicast service; and
sending, by the target access network device, information about a first forwarding path based on the first reference information, wherein the first forwarding path is used by the target access network device to receive first data of the first multicast service.

2. The communication method according to claim 1, wherein the first reference information comprises one or more of the following information: first identification information, first area information, or identification information of the first multicast service, wherein
the first identification information identifies a first data flow, and the first data flow is used by the source access network device to send the first data of the first multicast service to the terminal device; and the first area information represents a first sub-service area of the first multicast service to which the source access network device belongs.

3. The communication method according to claim 2, wherein the sending, by the target access network device, information about a first forwarding path based on the first reference information comprises:
if determining, based on the first reference information, that a first condition is met, sending, by the target access network device, the information about the first forwarding path, wherein
the first condition comprises one or more of the following:
the target access network device is located within the first sub-service area;
the source access network device is located within a second sub-service area of the first multicast service to which the target access network device belongs;
the first identification information corresponds to second identification information, the second identification information identifies a second data flow, and the second data flow is used by the target access network device to send second data of the first multicast service to the terminal device; or
the first area information corresponds to second area information, and the second area information represents a second sub-service area of the first multicast service to which the target access network device belongs.

4. The communication method according to claim 3, wherein the first area information identifies the first data, and the first area information corresponds to the first identification information.

5. The communication method according to any one of claims 1 to 4, wherein the information about the first forwarding path is carried in a first message, and the first message further comprises the first reference information.

6. The communication method according to any one of claims 1 to 5, wherein the method further comprises:
receiving, by the target access network device, the first reference information.

7. The communication method according to claim 1 or 2, wherein the method further comprises:
receiving, by the target access network device, the first data of the first multicast service from the source access network device through the first forwarding path; and
sending, by the target access network device, the first data of the first multicast service to the terminal device based on second reference information.

8. The communication method according to claim 7, wherein the second reference information comprises one or more of the following information: second identification information or second area information, wherein
the second identification information identifies a second data flow, and the second data flow is used by the target access network device to send second data of the first multicast service to the terminal device; and the second area information represents a second sub-service area of the first multicast service to which the target access network device belongs.

9. The communication method according to claim 8, wherein the sending, by the target access network device, the first data of the first multicast service to the terminal device based on second reference information comprises:
if determining, based on the second reference information, that a second condition is met, sending, by the target access network device, the first data of the first multicast service to the terminal device, wherein
the second condition comprises one or more of the following:
the source access network device is located within the second sub-service area; or
the source access network device is located within a sub-service area corresponding to the second identification information.

10. The communication method according to any one of claims 7 to 9, wherein the method further comprises:
receiving, by the target access network device, the second reference information from a multicast session management network element.

11. The communication method according to any one of claims 1 to 10, wherein the first reference information is carried in a second message, wherein the second message further comprises identification information of the multicast session management network element; and
the method further comprises:
sending, by the target access network device, first channel information to the multicast session management network element, wherein the first channel information is used by the multicast user plane network element to send the second data of the first multicast service to the target access network device.

12. A communication method, applied to a terminal device moving from a source access network device to a target access network device, wherein the method comprises:
receiving, by the source access network device, information about a first forwarding path; and
sending, by the source access network device, first data of a first multicast service to the target access network device through the first forwarding path.

13. The communication method according to claim 12, wherein the method further comprises:
obtaining, by the source access network device, first reference information of the first multicast service; and
the sending, by the source access network device, first data of a first multicast service to the target access network device through the first forwarding path comprises:
sending, by the source access network device, the first data of the first multicast service to the target access network device based on the first reference information through the first forwarding path.

14. The communication method according to claim 13, wherein the information about the first forwarding path is carried in a first message, and the first message further comprises the first reference information.

15. The communication method according to claim 13 or 14, wherein the first reference information comprises one or more of the following information: first identification information, first area information, or identification information of the first multicast service, wherein
the first identification information identifies a first data flow, and the first data flow is used by the source access network device to send the first data of the first multicast service to the terminal device; and the first area information represents a first sub-service area of the first multicast service to which the source access network device belongs.

16. The communication method according to claim 15, wherein the first reference information comprises the first identification information; and
the sending, by the source access network device, the first data of the first multicast service to the target access network device based on the first reference information through the first forwarding path comprises:
sending, by the source access network device to the target access network device through the first forwarding path, the first data corresponding to the first identification information.

17. The communication method according to claim 15, wherein the first reference information comprises the first area information; and
the sending, by the source access network device, the first data of the first multicast service to the target access network device based on the first reference information through the first forwarding path comprises:
determining, by the source access network device based on the first reference information, that the target access network device is located within a first sub-service area of the first multicast service to which the source access network device belongs; and
sending, by the source access network device, the first data of the first multicast service to the target access network device through the first forwarding path.

18. The communication method according to any one of claims 13 to 17, wherein the method further comprises:
sending, by the source access network device, the first reference information.

19. The communication method according to any one of claims 13 to 18, wherein the first reference information is carried in a second message, wherein the second message further comprises identification information of a multicast session management network element.

20. A communication method, applied to a terminal device moving from a source access network device to a target access network device, wherein the method comprises:
determining, by the source access network device, that the target access network device is located within a third sub-service area of a second multicast service to which the source access network device belongs; and
sending, by the source access network device, forwarding indication information to the target access network device, wherein the forwarding indication information indicates the target access network device to establish a second forwarding path, and the second forwarding path is used by the source access network device to send third data of the second multicast service to the target access network device.

21. The communication method according to claim 20, wherein the method further comprises:
receiving, by the source access network device, third area information, wherein the third area information represents the third sub-service area; and
the determining, by the source access network device, that the target access network device is located within a third sub-service area of a second multicast service to which the source access network device belongs comprises:
determining, by the source access network device based on the third area information, that the target access network device is located within the third sub-service area.

22. The communication method according to claim 20 or 21, wherein the forwarding indication information is carried in a third message, and the third message further comprises identification information of a multicast session management network element.

23. A communication method, applied to a terminal device moving from a source access network device to a target access network device, wherein the method comprises:
receiving, by the target access network device, forwarding indication information from the source access network device, wherein the forwarding indication information indicates the target access network device to establish a second forwarding path, and the second forwarding path is used by the source access network device to send third data of a second multicast service to the target access network device; and
sending, by the target access network device, the third data of the second multicast service from the source access network device to the terminal device based on the forwarding indication information.

24. The communication method according to claim 23, wherein the forwarding indication information is carried in a third message, and the third message further comprises identification information of a multicast session management network element; and the method further comprises:
sending, by the target access network device, second channel information to the multicast session management network element, wherein the second channel information is used by a multicast user plane network element to send fourth data of the second multicast service to the target access network device.

25. A communication method, wherein the method comprises:
sending, by a unicast session management network element, location information of a terminal device to a multicast session management network element; and
receiving, by the unicast session management network element, third identification information from the multicast session management network element, wherein the third identification information identifies a third data flow, and the third data flow is used by an access network device to send fifth data of a third multicast service to the terminal device.

26. The communication method according to claim 25, wherein the third identification information is carried in a fourth message, the fourth message further comprises fourth area information, and the fourth area information represents a fourth sub-service area of the third multicast service to which the access network device belongs.

27. The communication method according to claim 25, wherein the method further comprises:
sending, by the unicast session management network element, the third identification information to the access network device.

28. The communication method according to claim 27, wherein the third identification information is carried in a fifth message, and the fifth message further comprises fourth area information.

29. A communication method, wherein the method comprises:
receiving, by a multicast session management network element, location information of a terminal device from a unicast session management network element; and
sending, by the multicast session management network element, third identification information to the unicast session management network element based on the location information of the terminal device, wherein the third identification information identifies a third data flow, and the third data flow is used by an access network device to send fifth data of a third multicast service to the terminal device.

30. The communication method according to claim 29, wherein the third identification information is carried in a fourth message, the fourth message further comprises fourth area information, and the fourth area information represents a fourth sub-service area of the third multicast service to which the access network device belongs.

31. A communication apparatus, applied to a terminal device moving from a source access network device to a target access network device, wherein the apparatus comprises: a processing module and a transceiver module, wherein
the processing module is configured to obtain first reference information of a first multicast service; and
the processing module is further configured to control, based on the first reference information, the transceiver module to send information about a first forwarding path, wherein the first forwarding path is used by the target access network device to receive first data of the first multicast service.

32. The communication apparatus according to claim 31, wherein the first reference information comprises one or more of the following information: first identification information, first area information, or identification information of the first multicast service, wherein
the first identification information identifies a first data flow, and the first data flow is used by the source access network device to send the first data of the first multicast service to the terminal device; and the first area information represents a first sub-service area of the first multicast service to which the source access network device belongs.

33. The communication apparatus according to claim 32, wherein
the processing module is further configured to determine, based on the first reference information, that a first condition is met, wherein
the first condition comprises one or more of the following:
the target access network device is located within the first sub-service area;
the source access network device is located within a second sub-service area of the first multicast service to which the target access network device belongs;
the first identification information corresponds to second identification information, the second identification information identifies a second data flow, and the second data flow is used by the target access network device to send second data of the first multicast service to the terminal device; or
the first area information corresponds to second area information, and the second area information represents a second sub-service area of the first multicast service to which the target access network device belongs; and
the transceiver module is further configured to send the information about the first forwarding path.

34. The communication apparatus according to claim 33, wherein the first area information identifies the first data, and the first area information corresponds to the first identification information.

35. The communication apparatus according to any one of claims 31 to 33, wherein the information about the first forwarding path is carried in a first message, and the first message further comprises the first reference information.

36. The communication apparatus according to any one of claims 31 to 35, wherein
the transceiver module is further configured to receive the first reference information.

37. The communication apparatus according to claim 31 or 32, wherein
the transceiver module is further configured to receive the first data of the first multicast service from the source access network device through the first forwarding path; and
the processing module is further configured to control, based on second reference information, the transceiver module to send the first data of the first multicast service to the terminal device.

38. The communication apparatus according to claim 37, wherein the second reference information comprises one or more of the following information: second identification information or second area information, wherein
the second identification information identifies a second data flow, and the second data flow is used by the target access network device to send second data of the first multicast service to the terminal device; and the second area information represents a second sub-service area of the first multicast service to which the target access network device belongs.

39. The communication apparatus according to claim 38, wherein
the processing module is further configured to determine, based on the second reference information, that a second condition is met, wherein
the second condition comprises one or more of the following:
the source access network device is located within the second sub-service area; or
the source access network device is located within a sub-service area corresponding to the second identification information; and
the transceiver module is further configured to send the first data of the first multicast service to the terminal device.

40. The communication apparatus according to any one of claims 37 to 39, wherein
the transceiver module is further configured to receive the second reference information from a multicast session management network element.

41. The communication apparatus according to any one of claims 31 to 40, wherein the first reference information is carried in a second message, wherein the second message further comprises identification information of the multicast session management network element; and
the transceiver module is further configured to send first channel information to the multicast session management network element, wherein the first channel information is used by a multicast user plane network element to send the second data of the first multicast service to the target access network device.

42. A communication apparatus, applied to a terminal device moving from a source access network device to a target access network device, wherein the apparatus comprises: a processing module and a transceiver module, wherein
the transceiver module is configured to receive information about a first forwarding path; and
the processing module is configured to control the transceiver module to send first data of a first multicast service to the target access network device through the first forwarding path.

43. The communication apparatus according to claim 42, wherein
the processing module is further configured to obtain first reference information of the first multicast service; and
the processing module is further configured to control, based on the first reference information, the transceiver module to send the first data of the first multicast service to the target access network device through the first forwarding path.

44. The communication apparatus according to claim 43, wherein the information about the first forwarding path is carried in a first message, and the first message further comprises the first reference information.

45. The communication apparatus according to claim 43 or 44, wherein the first reference information comprises one or more of the following information: first identification information, first area information, or identification information of the first multicast service, wherein
the first identification information identifies a first data flow, and the first data flow is used by the source access network device to send the first data of the first multicast service to the terminal device; and the first area information represents a first sub-service area of the first multicast service to which the source access network device belongs.

46. The communication apparatus according to claim 45, wherein the first reference information comprises the first identification information; and
the transceiver module is further configured to send, to the target access network device through the first forwarding path, the first data corresponding to the first identification information.

47. The communication apparatus according to claim 45, wherein the first reference information comprises the first area information;
the processing module is further configured to determine, based on the first reference information, that the target access network device is located within a first sub-service area of the first multicast service to which the source access network device belongs; and
the processing module is further configured to control the transceiver module to send the first data of the first multicast service to the target access network device through the first forwarding path.

48. The communication apparatus according to any one of claims 43 to 47, wherein
the transceiver module is further configured to send the first reference information.

49. The communication apparatus according to any one of claims 43 to 48, wherein the first reference information is carried in a second message, wherein the second message further comprises identification information of a multicast session management network element.

50. A communication apparatus, applied to a terminal device moving from a source access network device to a target access network device, wherein the apparatus comprises: a processing module and a transceiver module, wherein
the processing module is configured to determine that the target access network device is located within a third sub-service area of a second multicast service to which the source access network device belongs; and
the transceiver module is configured to send forwarding indication information to the target access network device, wherein the forwarding indication information indicates the target access network device to establish a second forwarding path, and the second forwarding path is used by the source access network device to send third data of the second multicast service to the target access network device.

51. The communication apparatus according to claim 50, wherein
the transceiver module is further configured to receive third area information, wherein the third area information represents the third sub-service area; and
the processing module is further configured to determine, based on the third area information, that the target access network device is located within the third sub-service area.

52. The communication apparatus according to claim 50 or 51, wherein the forwarding indication information is carried in a third message, and the third message further comprises identification information of a multicast session management network element.

53. A communication apparatus, applied to a terminal device moving from a source access network device to a target access network device, wherein the apparatus comprises: a processing module and a transceiver module, wherein
the transceiver module is configured to receive forwarding indication information from the source access network device, wherein the forwarding indication information indicates the target access network device to establish a second forwarding path, and the second forwarding path is used by the source access network device to send third data of a second multicast service to the target access network device; and
the processing module is further configured to control, based on the forwarding indication information, the transceiver module to send the third data of the second multicast service from the source access network device to the terminal device.

54. The communication apparatus according to claim 53, wherein the forwarding indication information is carried in a third message, and the third message further comprises identification information of a multicast session management network element; and
the transceiver module is further configured to send second channel information to the multicast session management network element, wherein the second channel information is used by a multicast user plane network element to send fourth data of the second multicast service to the target access network device.

55. A communication apparatus, comprising: a sending module and a receiving module, wherein
the sending module is configured to send location information of a terminal device to a multicast session management network element; and
the receiving module is configured to receive third identification information from the multicast session management network element, wherein the third identification information identifies a third data flow, and the third data flow is used by an access network device to send fifth data of a third multicast service to the terminal device.

56. The communication apparatus according to claim 55, wherein the third identification information is carried in a fourth message, the fourth message further comprises fourth area information, and the fourth area information represents a fourth sub-service area of the third multicast service to which the access network device belongs.

57. The communication apparatus according to claim 55, wherein
the sending module is further configured to send third identification information to the access network device.

58. The communication apparatus according to claim 57, wherein the third identification information is carried in a fifth message, and the fifth message further comprises fourth area information.

59. A communication apparatus, comprising: a processing module and a transceiver module, wherein
the transceiver module is configured to receive location information of a terminal device from a unicast session management network element; and
the processing module is configured to control, based on the location information of the terminal device, the transceiver module to send third identification information to the unicast session management network element, wherein the third identification information identifies a third data flow, and the third data flow is used by an access network device to send fifth data of a third multicast service to the terminal device.

60. The communication apparatus according to claim 59, wherein the third identification information is carried in a fourth message, the fourth message further comprises fourth area information, and the fourth area information represents a fourth sub-service area of the third multicast service to which the access network device belongs.

61. A communication apparatus, wherein the communication apparatus is configured to perform the communication method according to any one of claims 1 to 30.

62. A communication apparatus, comprising a processor, wherein
the processor is configured to perform the communication method according to any one of claims 1 to 30.

63. A communication apparatus, comprising a processor, wherein the processor is coupled to a memory; and the processor is configured to execute a computer program stored in the memory, to enable the communication apparatus to perform the communication method according to any one of claims 1 to 30.

64. A communication apparatus, comprising a processor, wherein
the processor is configured to: be coupled to a memory, and after reading instructions in the memory, perform the communication method according to any one of claims 1 to 30 based on the instructions.

65. A communication apparatus, comprising: a processor and a memory, wherein the memory is configured to store computer instructions, and when the processor executes the instructions, the communication apparatus is enabled to perform the communication method according to any one of claims 1 to 30.

66. A communication apparatus, comprising: a processor and an interface circuit, wherein
the interface circuit is configured to receive code instructions and transmit the code instructions to the processor; and
the processor is configured to run the code instructions to perform the method according to any one of claims 1 to 30.

67. A communication apparatus, comprising: a processor and a transceiver, wherein the transceiver is configured to exchange information between the communication apparatus and another communication apparatus, and the processor executes program instructions to perform the communication method according to any one of claims 1 to 30.

68. A processor, wherein the processor is configured to perform the communication method according to any one of claims 1 to 30.

69. A computer-readable storage medium, wherein the computer-readable storage medium comprises a computer program or instructions, and when the computer program or the instructions are run on a computer, the computer is enabled to perform the communication method according to any one of claims 1 to 30.

70. A computer program product, wherein the computer program product comprises a computer program or instructions, and when the computer program or the instructions are run on a computer, the computer is enabled to perform the communication method according to any one of claims 1 to 30.
